# EUROPÄISCHE PATENTANMELDUNG

(11) **EP 4 283 246 A1**
(43) Veröffentlichungstag der Anmeldung: **29.11.2023**
(21) Anmeldenummer: 22208627.4
(22) Anmeldetag: 21.11.2022
(51) Int. Cl.: G01B 5/004, G05B 19/401

(54) **ANORDNUNG UND VERFAHREN ZUM AUSWERTEN VON MESSDATEN AUS EINER VERMESSUNG VON MESSOBJEKTEN DURCH ZUMINDEST EIN KOORDINATENMESSGERÄT**

(71) Anmelder: Carl Zeiss Industrielle Messtechnik GmbH, 73447 Oberkochen (DE)
(72) Erfinder: Labbé-Laurent, Marcel, 73430 Aalen (DE); Schüll, Reiner, 73479 Ellwangen (DE); Eckardt, Nils, 73655 Plüderhausen (DE)
(74) Vertreter: Brunotte, Joachim Wilhelm Eberhard

(57) **Zusammenfassung**

Die Erfindung betrifft eine Anordnung zum Auswerten von Messdaten (MD) aus einer Vermessung von Messobjekten durch zumindest ein Koordinatenmessgerät (KMG), wobei die Anordnung aufweist:
- zumindest ein Koordinatenmessgerät (KMG) zur Erzeugung der Messdaten (MD),
- zumindest zwei Auswertungseinrichtungen (AW) zur Auswertung der Messdaten (MD) und zur Erzeugung von Auswertungsergebnissen gemäß einem Auswertungsplan (AP),
- Anschlüsse an ein Übertragungsnetz, wobei die Anordnung ausgestaltet ist, die Messdaten (MD) von dem zumindest einen Koordinatenmessgerät (KMG) zu den zumindest zwei Auswertungseinrichtungen (AW) zu übertragen,
- eine Daten-Sendeeinrichtung, die zumindest einen der Anschlüsse an das Übertragungsnetz aufweist und die ausgestaltet ist, die von dem zumindest einen Koordinatenmessgerät (KMG) erzeugten Messdaten (MD) fortlaufend zu den zumindest zwei Auswertungseinrichtungen (AW) zu senden,

wobei der Auswertungsplan (AP) eine Mehrzahl von Auswertungsaufgaben definiert, die zur Erzeugung der Auswertungsergebnisse auszuführen sind,
wobei jeder der zumindest zwei Auswertungseinrichtungen (AW) in Bezug auf ein gegebenes, von dem zumindest einen Koordinatenmessgerät (KMG) vermessenes Messobjekt lediglich ein Teil der durch den Auswertungsplan (AP) definierten Auswertungsaufgaben zugeordnet ist,
wobei jede der Auswertungseinrichtungen (AW) ausgestaltet ist, von den Messdaten (MD), die von der Daten-Sendeeinrichtung in Bezug auf das gegebene Messobjekt an die zumindest zwei Auswertungseinrichtungen (AW) gesendet werden, einen ersten Datenteil zu verarbeiten, der für eine Ausführung der ihr zugeordneten Auswertungsaufgabe(n) erforderlich ist, aber einen zweiten Datenteil nicht zu verarbeiten, der für eine Ausführung der ihr zugeordneten Auswertungsaufgabe(n) nicht erforderlich ist.

## Beschreibung

Die Erfindung betrifft eine Anordnung und ein Verfahren zum Auswerten von Messdaten aus einer Vermessung von Messobjekten, insbesondere von Werkstücken und/oder Anordnungen von Werkstücken. Die Messdaten werden bei und/oder nach einer Vermessung des Messobjektes durch zumindest ein Koordinatenmessgerät erzeugt.

Bei der Auswertung von Messdaten aus der Vermessung von Messobjekten durch Koordinatenmessgeräte ist es möglich, mehr als eine Auswertungseinrichtung zu verwenden. Insbesondere kann dadurch die Dauer der Auswertung reduziert werden. Bei der wiederholten Vermessung typgleicher oder ähnlicher Werkstücke oder Anordnungen von Werkstücken, zum Beispiel aus der Serienfertigung solcher Werkstücke, kann auf diese Weise verhindert werden, dass die Auswertung der Messdaten länger dauert als die Vermessung und/oder insgesamt einen vorgegebenen Takt überschreitet.

Die Menge der aus der Vermessung erhaltenen Messdaten hängt von der Art der Vermessung ab. Zum Beispiel entsteht bei der taktilen Antastung einiger Oberflächenpunkte des jeweiligen Werkstücks eine verhältnismäßig kleine Datenmenge. Die Datenmenge ist im Vergleich dazu in der Regel größer, wenn eine scannende taktile oder optische Erfassung der Oberfläche des jeweiligen Werkstücks stattfindet oder wenn unter Verwendung einer Kamera ein Bild oder mehrere Bilder des Werkstücks aufgenommen werden. Noch größere Datenmengen entstehen typischerweise dann, wenn wie bei der Computertomografie mittels invasiver Strahlung Projektionsbilder des Messobjekts aufgenommen werden. Bei einer derartigen Vermessung eines Werkstücks ist dieses häufig auf einem Drehtisch angeordnet und es wird in einer Vielzahl von Drehstellungen jeweils ein Projektionsbild aufgenommen. Die erhaltenen Projektionsbilder werden unter Verwendung zumindest eines Computers für eine Rekonstruktion eines dreidimensionalen Bildes und/oder von Schnittbildern des Messobjekts verwendet.

Unter den Begriff Koordinatenmessgerät fallen jegliche Arten von Geräten, mit denen sich Koordinaten von Werkstücken ermitteln lassen. Bei einer Klasse von Koordinatenmessgeräten handelt es sich bei den Koordinaten um Oberflächenkoordinaten, d. h es werden Koordinaten von Oberflächenpunkten von Werkstücken ermittelt. Eine andere Klasse von Koordinatenmessgeräten ist alternativ oder zusätzlich in der Lage, Koordinaten im Inneren von Werkstücken zu ermitteln. Hierzu gehören Koordinatenmessgeräte, die invasive, in den Werkstoff des Werkstücks eindringende Strahlung nutzen und insbesondere die Intensität der durch das Werkstück hindurchtretenden Strahlung messen. Typischerweise wird das Werkstück aus verschiedenen Richtungen durchstrahlt und wird anhand der Ergebnisse der Durchstrahlung eine insbesondere computergestützte Rekonstruktion des erfassten Werkstücks durchgeführt. Derartige Verfahren werden auch als Computertomografie (CT) bezeichnet. Unter den Begriff Koordinatenmessgerät fallen aber auch klassische Koordinatenmessgeräte, zum Beispiel Geräte in Portalbauweise oder Gantrybauweise, Horizontalarmgeräte und Gelenkarmgeräte. Auch sind von dem Begriff Koordinatenmessgerät Maschinen erfasst, die zwar nicht primär als Koordinatenmessgeräte konzipiert sind, die aber so eingerichtet sind, wie ein Koordinatenmessgerät zu arbeiten. Insbesondere weisen diese Maschinen zumindest einen Messsensor auf, der für die Ermittlung der Koordinaten genutzt wird. Bekannt sind beispielsweise Roboter, zum Beispiel Roboterarme mit Drehgelenken, an denen anstelle eines Werkzeugs oder zusätzlich zu einem Werkzeug ein Sensor zur Erfassung der Werkstückoberfläche (beispielsweise ein Streifenprojektionssensor) befestigt ist, oder Werkzeugmaschinen, an denen anstelle eines Bearbeitungswerkzeugs oder zusätzlich zu einem Bearbeitungswerkzeug ein Messsensor (beispielsweise ein taktiler Sensor) befestigt ist. Auch sind beispielsweise Hexapodenmechaniken bekannt, an denen anstelle eines Bearbeitungswerkzeuges ein Sensor zur Erfassung der Werkstückoberfläche (beispielsweise ein taktiler Sensor) befestigt ist.

Auch personengeführte (zum Beispiel handgeführte) Sensoren zur Erfassung eines Werkstücks sind bekannt, wobei der zumindest eine Sensor optional an einer beweglichen Mechanik angeordnet ist. In diesem Fall fehlt ein motorischer Antrieb für die Erzeugung der Bewegung des Sensors. Stattdessen wird die Bewegung durch eine Person bewirkt. Sowohl eine scannende Erfassung des Messobjekts als auch eine Erfassung jeweils aus einer festen Position bei fester Ausrichtung des Sensors ist möglich. Bei personengeführten Sensoren wird vielfach das Triangulationsprinzip angewandt: zum Beispiel wird ein bekanntes Muster auf das Messobjekt projiziert und wird unter einem anderen Blickwinkel auf die Oberfläche zumindest ein Bild des Messobjekts aufgenommen. Statt der Projektion eines Musters kann bei der Anwendung des Triangulationsprinzips auch Laserstrahlung verwendet werden. Insbesondere der Ort des Empfangs der reflektierten Laserstrahlung enthält eine Information über Oberflächenkoordinaten des Messobjekts.

Auch bezüglich der Arten von Sensoren, die von einem Koordinatenmessgerät zur Ermittlung der Koordinaten verwendet werden, ist die Erfindung nicht beschränkt. Es wurden bereits taktile Sensoren als Beispiel erwähnt, bei denen es sich zum Beispiel um solche vom schaltenden Typ oder vom messenden Typ handeln kann. Bei den taktilen Sensoren kann es sich insbesondere um passive oder aktive Sensoren handeln. Aktive Sensoren können ausgestaltet sein, eine Antastkraft zu erzeugen, mit der ein taktiler Taster eine Oberfläche eines zu vermessenden Werkstücks antastet. Häufig werden alternativ oder zusätzlich optische Sensoren eingesetzt. Ferner gibt es zum Beispiel kapazitive Sensoren und induktive Sensoren.

Unter den Begriff Koordinatenmessgerät fallen daher auch 3D-Scanner. Hier sind wie oben erwähnt, aber nicht auf personengeführte Sensoren beschränkt, zum Beispiel triangulationsbasierte Systeme, wie Laserscanner und Projektionssensoren besonders vorteilhaft, da diese in kurzer Zeit viele Messpunkte mit ihren 3D-Koordinaten erzeugen können. Projektionssensoren projizieren ein flächenhaftes Muster, z.B. Streifenmuster, auf das Messobjekt und nehmen Bilder des Messobjektes mitsamt dem projizierten Muster mit mindestens einer Bildaufnahmeeinheit (Kamera) auf. Durch Auswertung der Bildaufnahmen können die 3D-Koordinaten von Oberflächenpunkten des Messobjektes bestimmt werden. Um ein Messobjekt bzw. die Messobjektoberfläche vollständig zu erfassen, genügt oft nicht nur eine Messposition, so dass die Relativposition vom 3D-Scanner zum Messobjekt meist mehrfach verändert wird. Diese Positionierung kann dabei manuell (handgehalten) erfolgen, oder auch halb-automatisiert oder automatisiert zum Beispiel durch Führen des 3D-Scanners mit einem Roboter. Auch oder zusätzlich kann die Positionsänderung durch eine Bewegung des Objektes relativ zum 3D-Scanner, zum Beispiel durch einen Drehtisch, realisiert werden.

In Bezug auf ein zu vermessendes Werkstück oder in Bezug auf eine zu vermessende Anordnung von Werkstücken ist es üblich, einen Prüfplan zu definieren, der die zu ermittelnden Prüfmerkmale des Messobjekts enthält. Zum Beispiel kann es sich bei den Prüfmerkmalen um Abmessungen, Positionen, Abweichungen von einer Sollform, von einer Symmetrie, von einer Koaxialität, Richtungen und Winkel handeln. Ein Prüfplan kann gemäß dem Stand der Technik in seiner Ausgestaltung spezifisch für eine bestimmte Klasse von Koordinatenmessgeräten sein und somit Aspekte der Messplanung vorwegnehmen und die Messplanung daher einschränken, beispielsweise spezifisch für die Klasse konventioneller taktiler Koordinatenmessgeräte oder Koordinatenmessgeräte zur Durchführung einer Computertomografie (CT). Insbesondere auch in Bezug auf die vorliegende Erfindung kann der Prüfplan ein abstrakter, gerätetyp-unabhängiger Prüfplan sein, aus dem sich eine Menge an Prüfmerkmalen ergibt. Vorzugsweise ist der gerätespezifische Messablauf unabhängig vom abstrakten Prüfplan, d.h. weist insbesondere keine vorausgesetzte Ordnung, Gruppierung oder Reihenfolge der Vermessung auf. Zum Beispiel kann der Prüfplan ein Modell des zu vermessenden Messobjekts, insbesondere Werkstücks oder Anordnung von Werkstücken, aufweisen, wobei das Modell zum Beispiel ein CAD (Computer Aided Desin)-Modell ist und zum Beispiel mit entsprechenden Prüfeinträgen versehen ist. Aus einem solchen abstrakten Prüfplan geht aber noch nicht hervor, wie die Prüfaufgabe auszuführen ist. Auch ein computerlesbarer Prüfplan muss aber nicht auf einem CAD-Modell basieren.

Vielmehr ist es auch möglich, eine oder mehrere technische Zeichnungen mit Prüfeinträgen für einen Computer verarbeitbar einzulesen.

Aus dem Prüfplan ist es möglich einen Messplan zu erstellen, der insbesondere unter Berücksichtigung der Art des verwendeten Koordinatenmessgeräts und des verwendeten Sensors Vorgaben zur Vermessung des Messobjekts enthält und damit z.B. zusätzlich eine Ordnung und/oder Reihenfolge von Aktionen bei der Vermessung enthält. Alternativ oder zusätzlich ist es möglich, aus dem Prüfplan und/oder dem Messplan einen Auswertungsplan zu erstellen, der die Auswertungsaufgaben enthält. Optional kann der Auswertungsplan eine Ordnung und/oder Reihenfolge in Bezug auf die Auswertung der Messdaten enthalten. Messplan und Auswertungsplan können in Beziehung zueinander stehen (m:n Relation), weisen aber im Allgemeinen unterschiedliche Ordnungen auf, da die Lösung einer Auswertungsaufgabe Messdaten mehrerer gemessener geometrischer Elemente des Messobjekts benötigen kann. Umgekehrt können Messdaten eines geometrischen Elements des Messobjekts für die Lösung verschiedener Auswertungsaufgaben erforderlich sein. Die erwähnte m:n Relation bedeutet insbesondere, dass das Ergebnis einer Messung für mehrere Auswertungsaufgabe genutzt werden kann und das aber auch die Ergebnisse mehrerer Messungen für dieselbe Auswertungsaufgabe genutzt werden können.

Durch Lösung einer Auswertungsaufgabe wird aus den vorhandenen Messdaten für das Messobjekt mindestens ein Prüfmerkmal ermittelt oder zumindest ein notwendiger Schritt zur Ermittlung eines Prüfmerkmals ausgeführt. Um zum Beispiel gemäß dem Prüfplan eine Rundheit eines Werkstücks oder eines Bereiches eines Werkstücks zu ermitteln, kann der Messplan die Vorgabe enthalten, dass der gesamte Umfang des Werkstücks oder eines Bereichs des Werkstücks durch das/ein Koordinatenmessgerät erfasst wird, zum Beispiel im Fall eines taktilen Sensors durch scannendes Abtasten der Oberfläche oder im Fall einer Kamera durch Aufnahme zumindest eines Bildes aus einer jeweils geeigneten Blickrichtung. Der Auswertungsplan enthält dann zum Beispiel die Auswertungsaufgabe, die für die Ermittlung der Rundheit erforderlichen Messdaten auszuwerten und ein Maß für die Rundheit zu ermitteln. Derartige Vorgehensweisen unter Verwendung von Prüfplänen, Messplänen und Auswertungsplänen sind eine Abstraktion der bekannten Vorgehensweise und hier zur Beschreibung zweckdienlich.

Allgemein ist für die Zwecke der vorliegenden Beschreibung der Erfindung
- unter einem Prüfplan eine Zusammenstellung von Informationen zu verstehen, die festlegt, dass zumindest ein Prüfmerkmal eines Messobjektes (insbesondere eines Werkstücks oder einer Anordnung von Werkstücken) zu ermitteln ist.
- unter einem Messplan eine Zusammenstellung von Informationen zu verstehen, die einen Messablauf zur Aufnahme von Messdaten eines Messobjektes durch zumindest ein Koordinatenmessgerät zumindest teilweise beschreibt und optional in Bezug auf ein bestimmtes Exemplar oder einen bestimmten Typ eines Koordinatenmessgeräts oder einer Anordnung von Koordinatenmessgeräten beschreibt.
- unter einem Auswertungsplan eine Zusammenstellung von Informationen zu verstehen, die zumindest eine Auswertungsaufgabe beschreibt, durch deren Lösung, d. h. durch Verarbeitung von Messdaten aus einer Vermessung eines Messobjektes durch zumindest ein Koordinatenmessgerät, ein Prüfmerkmal des Messobjektes ermittelt wird oder zumindest ein notwendiger Schritt zur Ermittlung des Prüfmerkmals ausgeführt wird.

Insbesondere bei einer Vielzahl von Prüfmerkmalen, die in einem Prüfplan definiert sind, kann es dazu kommen, dass der zugeordnete Auswertungsplan eine Vielzahl von Auswertungsaufgaben aufweist. Dies kann dazu führen, dass die Durchführung der Auswertung von größerer Tragweite für die Gesamtdauer der Vermessung ist als die Durchführung der physischen Messung durch das Koordinatenmessgerät. Insbesondere kann die Serienfertigung von Messobjekten, zum Beispiel Werkstücken und Anordnungen von Werkstücken, gemäß einem Arbeitstakt stattfinden. Idealerweise sind die Vermessung eines Messobjekts und die Auswertung der entstandenen Messdaten im auf die Herstellung folgenden Arbeitstakt abgeschlossen, damit das während dieses folgenden Arbeitstaktes hergestellte Messobjekt dann ohne Verzögerung vermessen werden kann und dessen Messdaten ausgewertet werden können. Für eine optimale Taktausnutzung ist ferner sinnvoll, dass die Ansteuerung des Koordinatenmessgeräts nach einer Messung, noch während der Auswertung, mit dem Vermessen des nächsten Messobjekts beginnen kann und nicht bis zum Abschluss der Auswertung stillsteht. Um die Auswertungsaufgaben parallel auszuführen und dadurch die Dauer der Auswertung zu reduzieren, können mehrere Auswertungseinrichtungen zur Verfügung gestellt werden. Hierfür muss jedoch im Stand der Technik der Prüfplan samt Auswertungsplan, oder auch nur der Auswertungsplan, für die verschiedenen Auswerteeinrichtungen umgestaltet werden und es muss jeweils definiert sein, welche Prüfmerkmale von ihr zu ermitteln sind. Als Auswertungseinrichtungen werden in der Praxis Computer-Workstations genutzt, die eigene, vollwertige Software-Installationen beinhalten und die die vollständigen Messdaten aus der Vermessung des jeweiligen Messobjekts erhalten. Die Ergebnisse der Ausführung der Auswertungsaufgaben durch die verschiedenen Auswertungseinrichtungen werden anschließend zusammengeführt, beispielsweise durch Übertragung der Ergebnisse zu einem Computer des Anwenders.

Es ist eine Aufgabe der vorliegenden Erfindung, eine Anordnung und ein Verfahren zum Auswerten von Messdaten aus einer Vermessung von Messobjekten durch zumindest ein Koordinatenmessgerät anzugeben, die eine Verkürzung der Dauer der Auswertung ermöglichen und insbesondere die Ausnutzung von Auswertungskapazitäten von Auswertungseinrichtungen erlauben zu verbessern.

Insbesondere in Bezug auf die oben beschriebene Nutzung eines Prüfplans und eines daraus abgeleiteten Auswertungsplans, aber nicht beschränkt darauf, wird vorgeschlagen, zur Ausführung mehrerer Auswertungsaufgaben jeweils die dazu erforderlichen Datenteile der Messdaten aus der Vermessung des Werkstücks zu verarbeiten, jedoch nicht erforderliche Datenteile (d.h. für die Auswertungsaufgabe überflüssige Datenteile) nicht zu verarbeiten, d.h. für die jeweilige Auswertungsaufgabe ungenutzt zu lassen. Grundsätzlich gibt es daher aus Sicht jeder der Auswertungseinrichtungen Untermengen der Messdaten, die für die jeweilige Auswertungsaufgabe zwingend relevant (erforderlich) sind, grundsätzlich nicht relevant sind, oder womöglich relevant sind - wobei letztere Teilmenge bei weiterer oder anderer Unterteilung letztlich auch als relevant und/oder nicht-relevant identifizierbar ist. Hierzu zählen beispielsweise Randpunkte einer Messung, die erst nach einer ersten, groben Einpassung des Objekts, herausgefiltert werden. Es kann daher sinnvoll sein, die Menge der womöglich relevanten Daten zunächst so wie die zwingend relevante Menge zu handhaben und, z.B. zu der jeweiligen Auswertungseinrichtung zu übertragen und/oder dazu zu selektieren und/oder zu speichern und/oder bei der Auswertung der jeweiligen Auswertungsaufgabe mit vorzuverarbeiten (insbesondere in einen Arbeitsspeicher der Auswertungseinrichtung zu laden), insbesondere wenn für eine genauere Differenzierung Angaben nicht ausreichen oder weiterer, insbesondere zu hoher Aufwand für eine Voranalyse betrieben werden müsste. Im Nachfolgenden werden bevorzugte Ausprägungen für eine Gruppierung in einen ersten und einen zweiten Datenteil geschildert. Außerdem werden Lösungen allgemein in Bezug auf den ersten Datenteil und den zweiten Datenteil beschrieben.

Es ist für die jeweilige Auswertungseinrichtung erforderlich, den ersten Datenteil zu verarbeiten, da der erste Datenteil für eine Ausführung (Lösung) der ihr zugeordneten Auswertungsaufgabe(n) erforderlich ist, zumindest gemäß dem Informationsstand zu einem gegebenen Zeitpunkt (z. B. vor einer Vorverarbeitung oder zu Beginn der Auswertung) erforderlich ist. Für die Lösung der Auswertungsaufgabe ist es aber in Bezug auf die zugeordnete(n) Auswertungsaufgabe(n) nicht erforderlich, einen zweiten Datenteil zu verarbeiten. Dieser zweite Datenteil wird auch nicht von der jeweiligen Auswertungseinrichtung verarbeitet.

Die Messdaten haben einen Bezug zu Koordinaten des vermessenen Messobjekts, insbesondere des Werkstücks, oder bestehen aus den Koordinaten. Zumindest nach einer in vielen aber nicht allen Anwendungsfällen stattfindenden Aufbereitung der Roh-Messdaten eines Koordinatenmessgeräts (KMG), die bereits zumindest teilweise von einem Messrechner des KMG durchgeführt wird und/oder von einer anderen Einrichtung durchgeführt wird, liegen Messpunkte des Messobjekts vor. Jeder Messpunkt ist durch die zweidimensionalen oder dreidimensionalen Koordinaten definiert. In manchen Fällen kann ein Messpunkt auch bereits durch eine Koordinate definiert sein.

Die Messdaten können jeweils für eine Auswertungseinrichtung anhand der Koordinaten in den ersten Datenteil und den zweiten Datenteil unterteilt werden, d.h. insbesondere der erste Datenteil kann direkt und/oder indirekt ermittelt werden. Bei der direkten Ermittlung des ersten Datenteils werden die Daten anhand der Koordinaten oder anhand einer Ordnung (siehe andernorts zu "räumlicher Bereich" und "Ordnungsbereich") aus den vorliegenden Messdaten ausgewählt. Bei der indirekten Ermittlung des ersten Datenteils werden die für die Erfüllung der Auswertungsaufgabe(n) der jeweiligen Auswertungseinrichtung nicht erforderlichen Daten ausgewählt, und optional entfernt oder als nicht erforderlich gekennzeichnet. Der verbleibende, bisher nicht ausgewählte Datenteil enthält dann den ersten Datenteil oder ist gleich dem ersten Datenteil, denn die nicht erforderlichen Daten sind entfernt worden oder als solche erkennbar.

Daher wird es bevorzugt, dass bei der Ermittlung des ersten Datenteils für die jeweilige Auswertungseinrichtung eine aus der jeweiligen Auswertungsaufgabe, die von der Auswertungseinrichtung auszuführen ist, resultierende Zuordnung der Datenteile zu einer Geometrie und/oder zu einem Raumbereich genutzt wird. In Sonderfällen kann es sich bei dem Raumbereich auch um einen eindimensionalen oder zweidimensionalen Raumbereich handeln, zum Beispiel wenn die Messdaten lediglich eindimensionale oder zweidimensionale Koordinateninformation enthalten. Optional kann bei einer Zuordnung einer Auswertungsaufgabe zu einer Geometrie auch der Ablauf der entsprechenden Vermessung der Geometrie des Werkstücks durch das jeweilige KMG berücksichtigt werden, zum Beispiel eine Bewegungsbahn eines Sensors des KMGs. Dies ermöglicht oder zumindest erleichtert es, zeitlich aufeinanderfolgend aufgenommene Messdatenteile der Geometrie und der Auswertungsaufgabe zuzuordnen. In diesem Fall wird die Zuordnung der Messpunkte zu einem Ordnungsbereich genutzt. Die Ordnung besteht in diesem Fall in der Reihenfolge der Messpunkte als Reihenfolge des zeitlichen Ablaufs ihrer Messung durch das KMG oder die KMGs.

Zum Beispiel kann die Auswertungsaufgabe aufweisen, dass bestimmte Prüfmerkmale eines Werkstücks ermittelt werden, etwa eine Rundheit (Abweichung von einer Kreisform) eines Bereichs des Werkstücks. Die Auswertungsaufgabe kann daher ausgeführt werden, wenn die Koordinaten aller Messpunkte der entsprechenden Geometrie, hier zum Beispiel in Bezug auf die Rundheit eine Kreisgeometrie, als erster Datenteil oder als Teilmenge des ersten Datenteils ausgewählt und verarbeitet werden. Wie noch näher beschrieben wird, kann die Tatsache, dass die Messpunkte des ersten Datenteils alle in einem räumlichen Bereich liegen oder in der Reihenfolge der von dem Koordinatenmessgerät aufgenommenen Messpunkte nacheinander aufgenommen werden, als Kriterium zur Auswahl genutzt werden.

Insbesondere anhand von einer vorgegebenen Zuordnung von Messpunkten zu einer Geometrie und/oder zu einem Raumbereich kann daher der erste Datenteil ermittelt werden. Zum Beispiel kann dies anhand von Planungsdaten oder Solldaten des Messobjekts erfolgen. Etwa soll ein Werkstück eine Kreisform haben. Messdaten im entsprechenden Raumbereich und/oder deren Koordinatenwerte eine bestimmte Beziehung zueinander haben (zum Beispiel X-Koordinate in Bezug auf Y-Koordinate jeweils unter Berücksichtigung einer möglichen Abweichung von Kreisform), können daher von vornherein als für die Bestimmung der Rundheit relevante Messdaten erforderlich festgelegt werden. Alternativ oder zusätzlich kann unmittelbar geprüft werden, ob die Koordinaten des jeweiligen zu prüfenden Messpunktes innerhalb eines geometrischen Bereichs liegen. In Bezug auf Projektionsbilder für eine Computertomografie kann zur Rekonstruktion bestimmter Teilvolumina des Messobjekts, insbesondere des Werkstücks oder der Anordnung von Werkstücken, für jedes Projektionsbild auf einfache Weise ermittelt werden, welcher Teil des Projektionsbildes das gemäß einer bestimmten Auswertungsaufgabe zu rekonstruierende Teilvolumen betrifft. Diese Zuordnung muss nicht eindeutig sein, auch eine potenzielle Zuordnung zu mehr als einer Geometrie oder zu mehr als einem Raumbereich ist möglich. Dann wird dieser Messpunkt als Teil der möglicherweise relevanten Teilmenge von zwei oder mehr Geometrien behandelt und entsprechend jeweils mit dem ersten Datenteil von den Auswertungseinrichtungen empfangen und verarbeitet, die die zugehörigen Geometrien referenzieren. Auch heuristische Methoden sind anwendbar, sofern sie Messpunkte als womöglich relevant klassifizieren ohne sie fälschlich auszuschließen.

An dieser Stelle soll aber angemerkt werden, dass die Ausführung einer bestimmten Auswertungsaufgabe es erfordern kann, Messdaten mehrerer Geometrien und/oder Raumbereiche aufzunehmen. Ein einfaches Beispiel hierfür ist die Ermittlung einer Parallelität oder eines Abstandes. Wenn daher von einem räumlichen Bereich oder einem Ordnungsbereich für die Selektion von Messpunkten die Rede ist, dann bedeutet dies abhängig von der zu lösenden Messaufgabe unter Umständen auch mehr als einen räumlichen Bereich oder Ordnungsbereich bzw. einen aus Teilbereichen zusammengesetzten Bereich.

Insbesondere im Fall der Computertomografie können große Datenmengen aus der Gewinnung der Projektionsbilder zur Verfügung stehen, wobei für die einzelnen Auswertungsaufgaben aber nur jeweils ein geringer Datenteil benötigt wird. Zum Beispiel befindet sich in zwei Volumenbereichen des zu untersuchenden Werkstücks jeweils eine abgewinkelt verlaufende Grenzfläche zwischen zwei verschiedenen Werkstoffen, wobei für jeden der beiden Volumenbereiche der Winkel zwischen Grenzflächenabschnitten als Prüfmerkmal zu ermitteln ist. Es kann nun zunächst eine vollständige Rekonstruktion des Volumens des Messobjekts aus den Projektionsbildern stattfinden und es kann dann der interessierende Volumenbereich ausgewertet werden, um den Winkel zu ermitteln. Die Dauer des Auswertungsprozesses ist in diesem Fall jedoch lang. Alternativ können für jeden der beiden Volumenbereiche lediglich die diesen Volumenbereich betreffenden Teile der Projektionsbilder als Grundlage für die Rekonstruktion des Teilvolumens ausgewertet werden und ist dann die Dauer der Auswertung sehr viel kürzer. Die jeweilige Auswertungsaufgabe, nämlich die Ermittlung des Winkels für lediglich einen der Volumenbereiche, kann auf verschiedene Auswertungseinrichtungen aufgeteilt werden. Es ist jedoch auch möglich, dass zunächst das gesamte aus den aufgenommenen Projektionsbildern rekonstruierbare Volumen rekonstruiert wird und dann selektiert wird, welche Messpunkte für die jeweilige Auswertungsaufgabe erforderlich sind.

Für die Übertragung der Messdaten von dem zumindest einen Koordinatenmessgerät zu den zumindest zwei Auswertungseinrichtungen wird ein Übertragungsnetz genutzt, das jedoch nicht zwangsläufig Teil der erfindungsgemäßen Anordnung sein muss. Es reicht aus, wenn Anschlüsse zu dem Übertragungsnetz vorhanden sind. Von einem Übertragungsnetz im Gegensatz zu einer Übertragungsverbindung kann bereits deshalb gesprochen werden, weil die Messdaten mittels einer Daten-Sendeeinrichtung zu zumindest zwei Auswertungseinrichtungen übertragen werden. Ferner gibt es sogar Ausgestaltungen der Erfindung, bei denen die Daten-Sendereinrichtung keine wesentliche Bedeutung für die Handhabung der zu den Auswertungseinrichtungen übertragenen Daten hat. Insbesondere bei solchen Ausgestaltungen werden daher zwar die Daten von den Auswertungseinrichtungen empfangen, die Daten-Sendeeinrichtung gehört jedoch nicht zum Umfang der Erfindung und insbesondere nicht zu der erfindungsgemäßen Anordnung. Dies kann insbesondere dann der Fall sein, wenn die Daten-Sendereinrichtung die Daten vollständig an jede der Auswertungseinrichtungen sendet bzw. wenn aus Sicht der Auswertungseinrichtungen jede der Auswertungseinrichtungen die Daten vollständig empfängt. Wenn die Daten-Sendeeinrichtung nicht zum Gegenstand der Erfindung bzw. der Ausgestaltung gehört, dann gehört auch nicht deren Anschluss an das Übertragungsnetz zum Gegenstand.

Auswertungseinrichtungen können, wie unten noch näher beschrieben wird, sich insbesondere hinsichtlich ihrer physischen Ausprägung unterscheiden. Sie können sich insbesondere in einem einzigen Rechner, in einem Rechnernetz von in einem gemeinsamen lokalen Bereich angeordneten Rechnern und/oder auch in einem verteilten Rechnernetz wie dem Internet befinden. Ein Übertragungsnetz liegt ebenfalls vor, weil gemäß Anordnung die Auswertungseinrichtungen mindestens von dem Koordinatenmessgerät physisch getrennt eingesetzt werden.

Die Übertragung der Daten kann gemäß einem beliebigen Übertragungsverfahren und insbesondere gemäß einem beliebigen Kommunikations-Protokoll stattfinden. Übertragungsverfahren und Kommunikations-Protokolle sind bekannt und werden hier nicht näher beschrieben. Ein Kommunikations-Protokoll ist eine Vereinbarung, nach der die Datenübertragung zwischen zwei oder mehreren Parteien abläuft. In einer einfachen Form kann ein Kommunikations-Protokoll durch eine Syntax, eine Semantik und eine Synchronisation der Kommunikation bestimmt sein. Protokolle können insbesondere durch Hardware, Software oder eine Kombination von beiden implementiert werden. Insbesondere kann das Übertragungsnetz ein Computernetz sein, sodass das Kommunikations-Protokoll ein Netzwerkprotokoll ist. Beispiele für Netzwerkprotokolle sind TCP/IP (Transmission Control Protocol/Internet Protocol), UDP (User Datagram Protocol), IPX (Internetwork Packet Exchange), SPX (Sequenced Packet Exchange) und NetBEUI (NetBIOS Extended User Interface).

Aufgrund der Natur der Messung eines Koordinatenmessgeräts, bei der Messdaten in zeitlicher Folge erzeugt werden, und insbesondere für solche Koordinatenmessgeräte mit großer Datenmenge, sind in einer bevorzugten Ausführungsform höher-geschichtete Datenprotokolle vorgesehen, die verlustfrei sind und für den Einsatz streamender Datenpakete optimiert sind. Beispiele für bidirektionale, streamende Datenprotokolle mit Broadcasting sind TCP, WebSocket und HTTP/2. Das Computernetz kann beispielsweise das Internet sein oder ein lokales und/oder proprietäres Computernetz. Der Begriff "höher"-geschichtete Datenprotokolle betrifft insbesondere ein ISO/OSI- Kommunikationsmodell bzw. - Schichtenmodell. Ein solches Schichtenmodell ist ein Referenzmodell für Netzwerkprotokolle, das von der International Telecommunication Union (ITU) als Standard veröffentlicht wird.

Je nach Ausgestaltung, auf die noch näher eingegangen wird, kann die Übertragung der Messdaten zu den Auswertungseinrichtungen als Broadcasting (Übersendung derselben Daten an alle Auswertungseinrichtungen) betrieben werden oder als Übertragung bestimmter Daten jeweils an eine der Auswertungseinrichtungen. Broadcasting hat den Vorteil, dass die Daten nicht vor dem Senden ausgewählt werden müssen. Sie können vielmehr schnell (insbesondere ohne Zeitverzögerung) und insbesondere unmittelbar nach der Erzeugung durch das zumindest eine Koordinatenmessgerät gesendet werden.

Allgemeiner formuliert wird zur Lösung der gestellten Aufgabe vorgeschlagen:
Eine Anordnung zum Auswerten von Messdaten aus einer Vermessung von Messobjekten durch zumindest ein Koordinatenmessgerät, wobei die Messdaten (MD) Messpunkte des jeweils vermessenen Messobjekts aufweisen und wobei die Anordnung aufweist:
- optional zumindest ein Koordinatenmessgerät zur Erzeugung der Messdaten, - zumindest zwei Auswertungseinrichtungen zur Auswertung der Messdaten und zur Erzeugung von Auswertungsergebnissen gemäß einem Auswertungsplan,
- Anschlüsse an ein Übertragungsnetz, wobei die Anordnung ausgestaltet ist, die Messdaten, insbesondere von dem zumindest einen Koordinatenmessgerät und/oder von einer Daten-Speichereinrichtung, zu den zumindest zwei Auswertungseinrichtungen (AW) zu übertragen,
- eine Daten-Sendeeinrichtung, die zumindest einen der Anschlüsse an das Übertragungsnetz aufweist und die ausgestaltet ist, die von dem zumindest einen Koordinatenmessgerät erzeugten Messdaten fortlaufend zu den zumindest zwei Auswertungseinrichtungen zu senden,

wobei der Auswertungsplan eine Mehrzahl von Auswertungsaufgaben definiert, die zur Erzeugung der Auswertungsergebnisse auszuführen sind,
wobei jeder der zumindest zwei Auswertungseinrichtungen in Bezug auf ein gegebenes, von dem zumindest einen Koordinatenmessgerät vermessenes Messobjekt lediglich ein Teil der durch den Auswertungsplan definierten Auswertungsaufgaben zugeordnet ist,
wobei jede der Auswertungseinrichtungen ausgestaltet ist, von den Messdaten, die von der Daten-Sendeeinrichtung in Bezug auf das gegebene Messobjekt an die zumindest zwei Auswertungseinrichtungen gesendet werden, einen ersten Datenteil zu verarbeiten, der für eine Ausführung der ihr zugeordneten Auswertungsaufgabe(n) erforderlich ist, aber einen zweiten Datenteil nicht zu verarbeiten, der für eine Ausführung der ihr zugeordneten Auswertungsaufgabe(n) nicht erforderlich ist.

Ferner wird ein Verfahren vorgeschlagen zum Auswerten von Messdaten aus einer Vermessung von Messobjekten durch zumindest ein Koordinatenmessgerät, wobei die Messdaten (MD) Messpunkte des jeweils vermessenen Messobjekts aufweisen und wobei eine Anordnung zum Auswerten der Messdaten Folgendes aufweist:
- optional zumindest ein Koordinatenmessgerät, das die Messdaten erzeugt,
- zumindest zwei Auswertungseinrichtungen, die die Messdaten auswerten und die Auswertungsergebnisse gemäß einem Auswertungsplan erzeugen,
- Anschlüsse an ein Übertragungsnetz, wobei die Anordnung die Messdaten, insbesondere von dem zumindest einen Koordinatenmessgerät und/oder von einer Daten-Speichereinrichtung, zu den zumindest zwei Auswertungseinrichtungen überträgt,
- eine Daten-Sendeeinrichtung, die einen der Anschlüsse an das Übertragungsnetz aufweist und die von dem zumindest einen Koordinatenmessgerät erzeugte Messdaten fortlaufend zu den zumindest zwei Auswertungseinrichtungen sendet,

wobei der Auswertungsplan eine Mehrzahl von Auswertungsaufgaben definiert, die zur Erzeugung der Auswertungsergebnisse auszuführen sind,
wobei jeder der zumindest zwei Auswertungseinrichtungen in Bezug auf ein gegebenes, von dem zumindest einen Koordinatenmessgerät vermessenes Messobjekts lediglich ein Teil der durch den Auswertungsplan definierten Auswertungsaufgaben zugeordnet ist und/oder wird, wobei jede der Auswertungseinrichtungen von den Messdaten, die von der Daten-Sendeeinrichtung in Bezug auf das gegebene Messobjekt an die zumindest zwei Auswertungseinrichtungen gesendet werden, einen ersten Datenteil verarbeitet, der für eine Ausführung der ihr zugeordneten Auswertungsaufgabe(n) erforderlich ist, aber einen zweiten Datenteil nicht verarbeitet der für eine Ausführung der ihr zugeordneten Auswertungsaufgabe(n) nicht erforderlich ist.

Außerdem wird ein Verfahren vorgeschlagen zum Herstellen einer Anordnung zum Auswerten von Messdaten aus einer Vermessung von Messobjekten durch zumindest ein Koordinatenmessgerät, wobei die Messdaten (MD) Messpunkte des jeweils vermessenen Messobjekts aufweisen und wobei:
- optional zumindest ein Koordinatenmessgerät zur Erzeugung der Messdaten bereitgestellt wird,
- zumindest zwei Auswertungseinrichtungen zur Auswertung der Messdaten und zur Erzeugung von Auswertungsergebnissen gemäß einem Auswertungsplan bereitgestellt werden,
- Anschlüsse zu einem Übertragungsnetz hergestellt werden, wobei die Anordnung ausgestaltet wird, die Messdaten von dem zumindest einen Koordinatenmessgerät zu den zumindest zwei Auswertungseinrichtungen zu übertragen,
- eine Daten-Sendeeinrichtung, die zumindest einen der Anschlüsse an das Übertragungsnetz aufweist, ausgestaltet wird, die von dem zumindest einen Koordinatenmessgerät erzeugten Messdaten fortlaufend zu den zumindest zwei Auswertungseinrichtungen zu senden,

wobei der Auswertungsplan eine Mehrzahl von Auswertungsaufgaben definiert, die zur Erzeugung der Auswertungsergebnisse auszuführen sind,
wobei jeder der zumindest zwei Auswertungseinrichtungen in Bezug auf ein gegebenes, von dem zumindest einen Koordinatenmessgerät vermessenes Messobjekt lediglich ein Teil der durch den Auswertungsplan definierten Auswertungsaufgaben zugeordnet ist,
wobei jede der Auswertungseinrichtungen ausgestaltet wird, von den Messdaten, die von der Daten-Sendeeinrichtung in Bezug auf das gegebene Messobjekt an die zumindest zwei Auswertungseinrichtungen gesendet werden, einen ersten Datenteil zu verarbeiten, der für eine Ausführung der ihr zugeordneten Auswertungsaufgabe(n) erforderlich ist, aber einen zweiten Datenteil nicht zu verarbeiten, der für eine Ausführung der ihr zugeordneten Auswertungsaufgabe(n) nicht erforderlich ist.

Ausgestaltungen der Anordnung und der Verfahren ergeben sich aus dieser Beschreibung und den beigefügten abhängigen Patentansprüchen, wobei aus einer Ausgestaltung der Anordnung eine entsprechende Ausgestaltung des Verfahrens folgt und umgekehrt. Wenn das Übertragungsnetz mit zu der Anordnung gehört, kann insbesondere auch das Übertragungsnetz ausgestaltet werden, nicht nur die zu übertragenen Daten (insbesondere Messdaten und andere Signale wie zum Beispiel Befehle) zu den Empfängern zu übertragen, sondern auch weitere Merkmale der Anordnung und/oder des Verfahrens zu realisieren. Es reicht jedoch aus, wenn Anschlüsse an ein Übertragungsnetz vorhanden sind und die entsprechenden Sende- und/oder Empfangseinrichtungen dazu in der Lage sind, die zu übertragenen Daten zu senden bzw. zu empfangen. Die übliche Verwendung von entsprechenden Protokollen wird an anderer Stelle in dieser Beschreibung erwähnt. Das Übertragungsnetz selbst muss lediglich dazu in der Lage sein, den Protokollen entsprechend die gewünschten Daten zu übertragen.

Das Übertragungsnetz kann insbesondere mit einem oder mehreren Datenübertragungskanälen ausgestaltet sein. Ein Übertragungskanal kann eine Auswerteeinrichtung als festen Empfangsadressaten haben oder kann alternativ keinen festen Empfangsadressaten haben. Im zuletzt genannten Fall können zum Beispiel alle verfügbaren Auswerteeinrichtungen im Übertragungsnetz (Broadcast-Betrieb) Empfänger der über das Übertragungsnetz übertragenen Messdaten sein.

Das zumindest eine Koordinatenmessgerät (KMG) kann Teil der Anordnung sein und es ist insbesondere auch möglich, dass ein Messrechner des KMG daran beteiligt ist oder dafür verantwortlich ist, dass der erste Datenteil für die jeweilige Auswertungsaufgabe selektiert wird.

Das Verfahren kann teilweise computerimplementiert sein. So sind zum Beispiel die Auswertungseinrichtungen typischerweise Computer, zum Beispiel wie oben erwähnt Workstations. Es kommen jedoch auch andere Arten von Computern und auch Computernetze (mit mindestens zwei Computern) als Auswertungseinrichtungen infrage, wie z.B. ein Smartphone, ein Personal Digital Assistant (PDA), ein Tabletcomputer, ein eingebettetes System (z. B. in dem Steuerrechner eines Koordinatenmessgeräts eingebettet), ein Ein- oder Mehrplatinencomputer, ein Personal Computer (PC), ein Desktop-Computer, ein Arbeitsplatzrechner, ein in ein Computernetz eingebundener Hostrechner oder Server, ein Thin Client - Computer, ein Netbook, ein Notebook, ein Laptop, ein Mainframe-Computer und/oder ein Supercomputer. Auch kann das Koordinatenmessgerät oder zumindest eines der Koordinatenmessgeräte der Anordnung einen Computer aufweisen, der beispielsweise zumindest die an die Auswertungseinrichtungen zu übersendenden Daten sendet und somit zumindest einen Teil der Daten-Sendeeinrichtung aufweist.

Vorteile der Lösung der gestellten Aufgabe wurden bereits teilweise genannt und ergeben sich aus der Aufgabe. Konkret kann die Dauer der Auswertung der Messdaten bereits dadurch verkürzt werden, dass die Auswertung auf zumindest zwei Auswertungseinrichtungen aufgeteilt wird. Dabei werden die erzeugten Messdaten fortlaufend zu den zumindest zwei Auswertungseinrichtungen gesendet und daher auch übertragen. Insbesondere kann die Auswertung daher bereits während der andauernden Erzeugung der Messdaten beginnen. Wenn die für die Erfüllung einer Auswertungsaufgabe erforderlichen Messdaten bereits erzeugt sind und an eine der Auswertungseinrichtungen übertragen worden sind, kann die Auswertungsaufgabe auch bereits während der andauernden Erzeugung der Messdaten erfüllt werden. In diesem Fall steht dieselbe Auswertungseinrichtung, die die Auswertungsaufgabe erfüllt hat, für die Ausführung einer weiteren Auswertungsaufgabe zur Verfügung. Der Auswertungsplan in Kombination mit der fortlaufenden Übertragung der Messdaten erlaubt darüber hinaus effizient eine Ausnutzung von Auswertungskapazitäten von Auswertungseinrichtungen.

Die bereits erwähnte fortlaufende Sendung der erzeugten Messdaten durch die Daten-Sendeeinrichtung während der Vermessung des gegebenen Messobjekts wird bevorzugt. Selbstverständlich dauert das Senden und Übertragen der erzeugten Messdaten noch eine gewisse Zeit über das Ende der Vermessung an.

Das Broadcasting der Messdaten wurde bereits erwähnt. Gemäß einer Ausgestaltung der Anordnung bzw. des Verfahrens kann die Daten-Sendeeinrichtung daher die von dem zumindest einen Koordinatenmessgerät erzeugten und außerhalb von dem zumindest einen Koordinatenmessgerät auszuwertenden Messdaten vollständig an jede der zumindest zwei Auswertungseinrichtungen senden, wobei jede der zumindest zwei Auswertungseinrichtungen eine zugeordnete Auswahleinrichtung aufweist, die ausgestaltet ist, den ersten Datenteil zur Ausführung der ihr zugeordneten Auswertungsaufgabe(n) auszuwählen. Es findet somit insbesondere ein kontinuierlicher oder quasi-kontinuierlicher Datenstrom von Messdaten von dem zumindest einen Koordinatenmessgeräte zu den Auswertungseinrichtungen statt.

Die Empfänger der Messdaten, die insbesondere jeweils eine mit den Auswertungseinrichtungen kombinierte Empfangseinrichtung sind, können daher alle Messdaten empfangen. Abhängig von der konkreten Ausgestaltung kann aber bereits die Empfangseinrichtung den ersten Datenteil, insbesondere wie oben beschrieben direkt oder indirekt, aus dem Strom von empfangenen Daten auswählen. Alternativ oder zusätzlich findet diese Auswahl nach dem Empfang der Daten statt. Daher weist die Kombination aus Auswertungseinrichtung und Empfangseinrichtung (die optional als Teil der Auswertungseinrichtung realisiert werden kann) eine entsprechende Auswahleinrichtung auf. Insbesondere kann die Übertragung der Messdaten so ausgestaltet sein, dass die Empfangseinrichtung und die zugeordnete Auswertungseinrichtung keine direkte, bidirektionale Übertragungsverbindung zu der Daten-Sendeeinrichtung haben. Es ist jedoch auch nicht ausgeschlossen, dass bei der hier beschriebenen Ausgestaltung der noch eine Kommunikationsverbindung zwischen der jeweiligen Auswertungseinrichtung und der Daten-Sendeeinrichtung besteht. Beispielsweise könnte auf diese Weise eine Auswertungseinrichtung der Daten-Sendereinrichtung mitteilen, dass sie nicht oder nicht mehr zu der Ausführung der ihr zugewiesenen Auswertungsaufgabe(n) in der Lage ist. Dies wiederum eröffnet die Möglichkeit, einer anderen Auswertungseinrichtung alle Messdaten oder die für die Ausführung dieser Auswertungsaufgabe(n) erforderlichen Messdaten zuzusenden. Eine Übertragung von Nachrichten dieser Art, die nicht lediglich eine Bestätigung von erhaltenen Daten mitteilen, kann auch bei anderen Ausgestaltungen realisiert werden, nicht nur beim Broadcasting. Beim Broadcasting wiederum haben die Empfangseinrichtungen und/oder die Auswertungseinrichtungen die Möglichkeit, den Empfang von Messdaten zu beenden, beispielsweise wenn alle für die Ausführung der der jeweiligen Auswertungseinrichtung gestellten Auswertungsaufgabe(n) erforderlichen Messdaten empfangen worden sind.

Gemäß einer anderen Ausgestaltung ist die Daten-Sendeeinrichtung ausgestaltet, an eine, mehrere oder alle der Auswertungseinrichtungen jeweils den zweiten Datenteil nicht zu senden, der für die Ausführung der der Auswertungseinrichtung zugeordneten Auswertungsaufgabe(n) nicht erforderlich ist. In diesem Fall muss die jeweilige Auswertungseinrichtung nicht die für die Erfüllung der ihr gestellten Auswertungsaufgabe(n) erforderlichen Daten auswählen. Optional allerdings kann die Anordnung dennoch so ausgestaltet sein, dass zumindest eine der Auswertungseinrichtungen überprüft, ob sie alle erforderlichen Daten erhalten hat. Andernfalls kann sie zum Beispiel eine entsprechende Nachricht an die Daten-Sendereinrichtung oder eine damit kombinierte Einrichtung, die Einfluss auf das Senden von Daten hat, versenden.

Bevorzugt wird, dass jede der zumindest zwei Auswertungseinrichtungen eine zugeordnete Steuereinrichtung aufweist, die die Auswertungseinrichtung zur Auswertung der von ihr empfangenen Messdaten entsprechend der/den ihr zugeordneten Auswertungsaufgabe(n) steuert. Insbesondere kann der jeweiligen Steuereinrichtung die jeweilige von der Auswertungseinrichtung auszuführende Auswertungsaufgabe übermittelt werden, beispielsweise durch Übersendung der Auswertungsaufgabe oder durch Zugriff der Steuereinrichtung auf einen Datenspeicher, in dem die Auswertungsaufgabe als von der von ihr gesteuerten Auswertungseinrichtung auszuführen gekennzeichnet ist.

Die Aufteilung der insgesamt auszuführenden Menge an Auswertungsaufgaben auf eine Mehrzahl von Auswertungseinrichtungen ist ein Element der Beschleunigung der Auswertung gegenüber vorbekannten Anordnungen und Verfahren. Es wird bevorzugt, dass die Anordnung eine Aufgaben-Verteilungseinrichtung aufweist, die ausgestaltet ist, die Mehrzahl von Auswertungsaufgaben vor Beginn, zu Beginn und/oder während der fortlaufenden Sendung der erzeugten Messdaten zu den zumindest zwei Auswertungseinrichtungen auf für die Ausführung der Mehrzahl von Auswertungsaufgaben verfügbare Auswertungseinrichtungen zu verteilen. Insbesondere kann mit der Aufteilung der Auswertungsaufgaben bereits begonnen werden, wenn ein Prüfplan der oben beschriebenen Art vorliegt. Optional können bei der Aufteilung auch die Art der für die Durchführung des Prüfplans zu verwendenden Koordinatenmessgeräte und/oder die Art der zur Verfügung stehenden Auswertungseinrichtungen berücksichtigt werden. Dies ermöglicht eine Berücksichtigung der zur Verfügung stehenden Ressourcen für die Aufteilung der Aufgaben. Insbesondere ist es möglich und von Vorteil, die Aufteilung der Auswertungsaufgabe nicht unwiderruflich abzuschließen, bevor die Übertragung der Messdaten zu den Auswertungseinrichtungen begonnen hat und vorzugsweise auch nicht bevor zumindest ein Teil der Auswertungsaufgabe bereits von zumindest einer Auswertungseinrichtung ausgeführt worden ist. Dadurch kann eine Zuweisung von zumindest einer Auswertungsaufgabe zu einem der zur Verfügung stehenden Auswertungseinrichtungen auch noch stattfinden, wenn die Übertragung und/oder Auswertung der Messdaten noch nicht abgeschlossen ist. Die Aufteilung der Auswertungsaufgabe kann daher in diesem Sinne dynamisch und insbesondere unter Berücksichtigung der aktuell zur Verfügung stehenden Ressourcen bei den Auswertungseinrichtungen stattfinden. Zum Beispiel kann auch noch nach Beginn der Übertragung der Messdaten zu den Auswertungseinrichtungen und/oder nach Beginn der Ausführung zumindest einer der Auswertungsaufgaben eine Auswertungsaufgabe an eine Auswertungseinrichtung zugewiesen werden, welche zu dem Beginn noch nicht als Auswertungseinrichtung zur Verfügung stand. Dies ermöglicht es zum Beispiel zumindest eine zusätzliche Auswertungseinrichtung an der Auswertung zu beteiligen, wenn festgestellt wird, dass die Gesamtheit der Auswertungsaufgaben durch die bisher zur Verfügung stehenden Auswertungseinrichtungen nicht wie gewünscht ausgeführt werden können. Beispielsweise kann dadurch eine ansonsten nicht mehr erreichbare maximale Dauer des Vorgangs der Auswertung der Messdaten eingehalten werden und/oder zumindest eine ausgefallene (da zum Beispiel defekt gewordene oder für andere Aufgaben benötigte) Auswertungseinrichtung ersetzt werden.

Die zuvor erwähnten Steuereinrichtungen und Empfangseinrichtungen, von denen zumindest jeweils eine mit einer der Auswertungseinrichtungen kombiniert werden kann, verdeutlichen, dass es sich bei den Auswertungseinrichtungen um separate Einrichtungen mit eigenen Schnittstellen handelt. Insbesondere hat eine Empfangseinrichtung einen Anschluss zu dem Daten-Übertragungsnetz. Die Steuereinrichtung einer Auswertungseinrichtung hat je nach Art der Auswertungseinrichtung zusätzlich die Möglichkeit, innerhalb der Auswertungseinrichtung parallele Prozesse der Datenverarbeitung zu steuern, insbesondere zu starten. Eine solche interne Parallelisierung ist zu unterscheiden von dem grundlegenden Konzept der vorliegenden Erfindung, das eine Verteilung von Auswertungsaufgaben gemäß einem Auswertungsplan und die Aufteilung der auszuwertenden Messdaten, entweder auf der absendenden Seite des Daten-Übertragungsnetzes oder auf dessen Empfängerseite vorsieht. Grundsätzlich ist es auch möglich, dass die Aufteilung durch Maßnahmen sowohl auf der absendenden Seite als auch auf der Empfängerseite erreicht wird. Auch kann die Aufteilung, wie noch aus den später beschriebenen Ausführungsbeispielen entnehmbar ist, mehrstufig erfolgen. Zum Beispiel in Bezug auf die Messdaten kann ein durch Aufteilung erhaltener Teil der Messdaten beispielsweise nochmals aufgeteilt werden. Insbesondere findet eine Aufteilung der Auswertungsaufgaben in Richtung des Datenstroms der übertragenen Messdaten nicht lediglich an einem Empfangsort der Daten statt, und somit insbesondere nicht innerhalb eines Computers.

Dennoch kann bezüglich der Auswertungseinrichtungen und optional bezüglich weiterer Einrichtungen der Anordnung allgemein von Rechenknoten gesprochen werden, wenn es sich um Rechner bzw. Computer handelt. Diese können ohne Beschränkung der Allgemeinheit Computerprozesse, oder virtuelle oder physische Rechner sein. Im Fall von Computerprozessen ist diesen vorzugsweise wie oben bereits ausgeführt jeweils eine Steuereinrichtung und/oder eine Empfangseinrichtung zum Empfangen der Messdaten zugeordnet.

Im Folgenden werden weitere Merkmale von möglichen Ausgestaltungen der Anordnung und des Verfahrens beschrieben. Die folgende Beschreibung bezieht sich, auch wenn nicht jeweils im Detail angegeben, gegebenenfalls auf zuvor beschriebene Ausführungsformen und Merkmale.

Die Funktionalität der Erfindung betrifft insbesondere die Verteilung der Auswertungsaufgaben und der zugehörigen Messdaten an mehrere beteiligte Rechenknoten.

In einer ersten Variante, die gemäß dem "Push-Prinzip" funktioniert, werden nur die oben genannten ersten Daten (welche zur Lösung einer gestellten Auswertungsaufgabe erforderlich sind) und optional die oben genannten dritten Daten von einer Einrichtung zu einer anderen Einrichtung der Anordnung weitergegeben. Die Entscheidung über die Datenmenge und das Ziel der Übertragung liegen auf der Senderseite. Diese kann auch den Abschluss der Übertragung an die Empfängerseite mitteilen.

In einer zweiten Variante, die gemäß dem "Pull-Prinzip" funktioniert, überwachen die Empfänger einen in Bezug auf die gestellte Auswertungsaufgabe unspezifischen Datenstrom, der im Allgemeinen mehr Daten enthält, als der Empfänger benötigt. Die Empfänger selektieren jeweils nur die für ihre Auswertungseinrichtung benötigten Daten. Jeder Empfänger entscheidet individuell über die Menge und Umfang der Daten und beendet die Datenübertragung nach eigener Entscheidung. Auch Kombinationen des Push-Betriebes und des Pull-Betriebes sind möglich.

Insbesondere kann/können, z. B. im Fall des Push-Betriebs die Daten-Sendeeinrichtung oder eine mit ihr kombinierte Einrichtung und z. B. im Fall des Pull-Prinzips die Empfänger, alle Messpunkte des ersten Datenteils auf Grundlage einer Prüfung selektieren, ob die mit dem Datenstrom übermittelten Messpunkte in dem räumlichen Bereich oder dem Ordnungsbereich der Messdaten liegen, der für die zu lösende Auswertungsaufgabe definiert ist. Da in manchen Ausgestaltungen in dem räumlichen Bereich oder dem Ordnungsbereich auch Messpunkte (eines so genannten dritten Datenteils) liegen, die möglicherweise nicht für die Lösung der gestellten Auswertungsaufgabe erforderlich sind, können auch nicht zu dem ersten Datenteil gehörende Messpunkte selektiert werden. Die Selektion kann daher insbesondere auch dadurch erfolgen, dass geprüft wird, ob die mit dem Datenstrom übermittelten Messpunkte außerhalb des räumlichen Bereichs oder des Ordnungsbereichs der Messdaten liegen, der für die zu lösende Auswertungsaufgabe definiert ist. Diese außerhalb liegenden Messpunkte gehören zu dem zweiten Datenteil, der für die Ausführung der zugeordneten Auswertungsaufgabe nicht erforderlich ist. Es ist auch möglich, in demselben Selektionsprozess die Messdaten zu selektieren, die für die Ausführung von mehr als einer Auswertungsaufgabe erforderlich sind.

Allgemeiner formuliert ist/wird für zumindest eine der Auswertungsaufgaben, die einer der zumindest zwei Auswertungseinrichtungen zugeordnet ist, jeweils ein räumlicher Bereich oder ein Ordnungsbereich der Messdaten definiert, in dem alle Messpunkte des ersten Datenteils liegen und in dem keine Messpunkte des zweiten Datenteils liegen, und wobei gemäß dem Auswertungsverfahren bzw. gemäß einer Ausgestaltung der Anordnung, Messpunkte
- des ersten Datenteils auf Grundlage einer Prüfung selektiert werden, ob der jeweilige Messpunkt in dem räumlichen Bereich oder dem Ordnungsbereich der Messdaten liegt, der für die zu lösende Auswertungsaufgabe definiert ist, und/oder
- des zweiten Datenteils auf Grundlage einer Prüfung selektiert werden, ob der jeweilige Messpunkt außerhalb des räumlichen Bereichs oder des Ordnungsbereichs der Messdaten liegt, der für die zu lösende Auswertungsaufgabe definiert ist. Die Selektierung bedeutet anders ausgedrückt, dass die für die Lösung der jeweiligen Auswertungsaufgabe erforderlichen / nicht erforderlichen Daten erkannt werden.

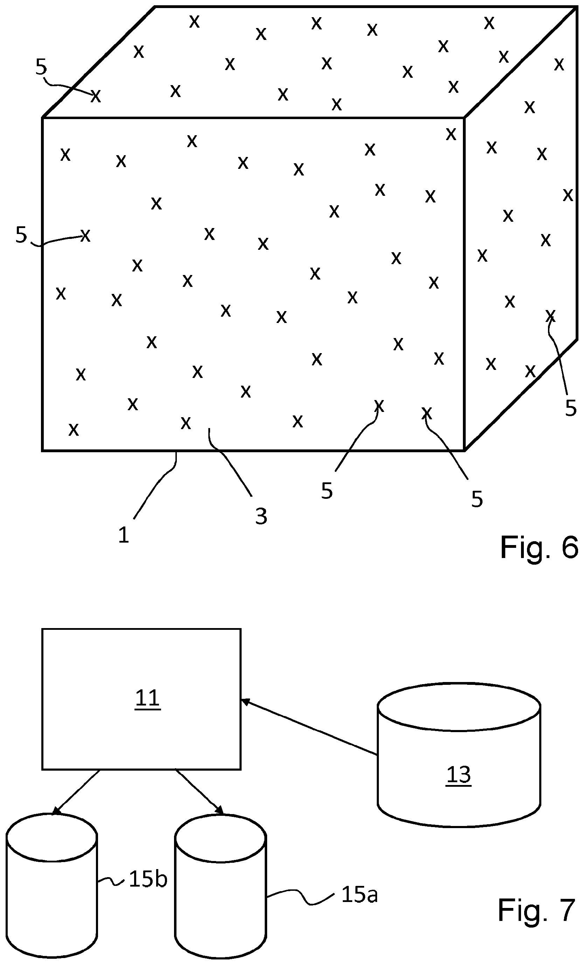

Wie oben bereits erwähnt, kann die Selektion insbesondere erfolgen, um jeweils Messdaten an eine bestimmte Auswertungseinrichtung zu senden oder die Messdaten zu senden, um sie für die Lösung einer bestimmten Auswertungsaufgabe zur Verfügung zu stellen. Alternativ oder zusätzlich kann die Selektion erfolgen, um aus einem Strom von Messdaten die für die zu lösende Auswertungsaufgabe erforderlichen oder nicht erforderlichen Messdaten zu identifizieren. Wenn zum Beispiel ein nicht für die Lösung der Auswertungsaufgabe erforderlicher Messpunkt identifiziert worden ist, kann dieser beispielsweise aus einem empfangenen Datenstrom gelöscht werden oder in dem Datenstrom oder dem entsprechenden Datensatz so gekennzeichnet werden, dass er bei der Lösung der Auswertungsaufgabe nicht berücksichtigt wird und insbesondere auch nicht verarbeitet wird. Umgekehrt kann ein für die Lösung der Auswertungsaufgabe erforderlicher Messpunkt gespeichert werden, insbesondere vorübergehend oder dauerhaft gespeichert werden. Alternativ kann ein erforderlicher Messpunkt als solcher zunächst lediglich gekennzeichnet werden. Am Ende der Figurenbeschreibung, nach der Beschreibung der Fig. 6 und 7, werden noch konkrete Ausführungsbeispiele und weitere Ausgestaltungen sowie Abwandlungen in Bezug auf die Selektion des ersten Datenteils beschrieben.

Bei der Verteilung der Auswertungsaufgaben können Rechenknoten von einer für die Verteilung vorgesehenen Einrichtung der Anordnung durch einen Befehl gestartet werden, insbesondere über einen "Boot-Push"-Befehl. Ferner können die Rechenknoten mit einer Auswertungsaufgabe initialisiert werden, d. h. sie werden mit einer ersten oder später auch einer weiteren Auswertungsaufgabe beauftragt. Dies kann bereits bei der Generierung des Auswertungsplans erfolgen, oder dynamisch durch andere Rechenknoten zur weiteren Verteilung bei der Auswertung. Der Befehl kann alternativ von einer Verteilungseinrichtung gegeben werden, die den Befehl an zur Auswertung von Messdaten freie und empfangsbereite Rechenknoten aus einem Pool von Rechenknoten sendet. Dabei kann es sich optional auch um einen Rechenknoten handeln, der später, nach Beginn der Auswertung der Messdaten zu dem Pool hinzugekommen ist.

Der Auswertungsplan weist die Zuordnung der Auswertungsaufgaben auf Rechenknoten auf, jedoch in der Regel nicht auf konkrete Rechenknoten, sondern auf beliebige Rechenknoten. Der Auswertungsplan kann vor der dem Beginn der Auswertung der Messdaten erstellt worden sein oder erstellt werden, er kann aber alternativ oder zusätzlich während der Auswertung dynamisch durch die Auswerteknoten verändert und insbesondere optimiert werden. Ferner kann er in Teilen zu anderen Einrichtungen der Anordnung übertragen werden und von diesen können die Auswertungsaufgaben weiter auf Rechenknoten verteilt werden. Eine Auswertungsaufgabe ist ein Teil der Gesamtmenge der Auswertungsaufgaben eines Auswertungsplans.

Auch das Sammeln der einzelnen Ergebnisse der Auswerteaufgeben von den Rechenknoten kann als Auswerteaufgabe verstanden werden und kann entsprechend wie die Verteilung der eigentlichen Auswertungsaufgabe bis zum Erhalt eines jeweiligen Ergebnisses realisiert werden. Für die Verteilung der Aufgaben wie auch für die Verteilung der Messdaten ist sowohl das Push- als auch das Pull-Prinzip geeignet.

Zur Erfüllung der Auswertungsaufgaben zur Auswertung der Messdaten können die Rechenknoten eine Verbindung mit einer durch den oben genannten Startbefehl (z. B. Boot-Push-Befehl) festgelegten, startenden Einrichtung aufbauen und können spezifisch die für ihre Auswertungsaufgabe benötigten Daten (einschließlich einer möglicherweise weiter konkretisierten Aufgabe) erfragen, die sie über einen bidirektionalen Streaming-Kanal als Antwort erhalten (Push-Prinzip). Die Verbindungen zu den verschiedenen Rechenknoten sind parallel, erfordern aber Datenverarbeitung durch den Sender.

Alternativ können die Rechenknoten eine Verbindung über einen bidirektionalen Streaming-Kanal mit der gemäß dem Broadcasting sendenden Daten-Sendereinrichtung aufbauen (Pull-Prinzip). Hierbei muss die Daten-Sendereinrichtung keine Kenntnis über die Empfänger und deren Auswertungsaufgaben haben und muss daher keine Differenzierung der Daten vornehmen. Jede Verbindung zwischen der Daten-Sendereinrichtung und den Empfängern ist parallel und unabhängig.

Diese Verfahren können innerhalb eines übergeordneten, optimierten Auswertungsplans gemischt zum Einsatz kommen. Damit ist eine dynamische, auf dem Prüfplan und der Gesamtkapazität skalierte Auswertung im Rechenknoten-Verbund möglich, sobald sich parallele und unabhängig Aufgaben aus dem Auswertungsplan ergeben.

Das zugrundeliegende Kommunikations-Protokoll muss im Fall des Broadcasting dazu in der Lage sein, d.h. zu der Vervielfältigung der Datenpakete an alle (beliebig viele) Empfänger. Die Aufgabe der Mess-Workstation, d.h. der Koordinatenmessgeräte mit jeweils einem Teil der Gesamt-Daten-Sendereinrichtung ist es, die Messdaten kontinuierlich auf Basis des Kommunikations-Protokolls zu versenden.

In der Pull-Variante empfangen die Rechenknoten bzw. ihre jeweilige Empfangseinrichtung den gesamten Datenstrom, verarbeiten aber insbesondere nur solche Daten, die für ihre Auswertungsaufgabe erforderlich sind. Damit verbundene dritte Daten können teilweise mitverarbeitet werden und/oder erst beim Verarbeiten der ersten Daten als nicht erforderliche Daten erkannt werden. Zum Beispiel mit dem durch die jeweilige Auswertungsaufgabe(n) definierten letzten Messpunkt können die Rechenknoten die Verbindung zu der Daten-Sendereinrichtung beenden. Sie können dann nach oder auch noch vor Abschluss des Empfangs der für die Erfüllung der jeweiligen Auswertungsaufgabe(n) erforderlichen Messdaten mit der Auswertung beginnen.

In der Push-Variante erhalten der oder die Rechenknoten die erforderlichen Daten und zum Beispiel wird die Verbindung mit dem durch die jeweilige Auswertungsaufgabe(n) definierten letzten Messpunkt durch den Sender beendet.

Der Status und der erfolgreiche oder gescheiterte Abschluss der Auswertungsaufgabe kann über das Kommunikationsprotokoll an eine Kontrollinstanz (zum Beispiel eine zentrale Instanz oder eine übergeordnete, Daten und/oder Auswertungsaufgaben verteilende Einrichtung) gemeldet werden. Ein Verbindungsabbruch wird vorzugsweise auf Basis des Kommunikationsprotokolls von den beteiligten Einrichtungen erkannt. Alternativ oder zusätzlich ist es möglich, bei einer bidirektionalen Verbindung eine maximale Zeitspanne vorzugeben. Wenn innerhalb dieser maximalen Zeitspanne keine Nachrichten mehr von der jeweiligen Gegenseite der Übertragungsverbindung empfangen worden ist, wird von einem Abbruch der Verbindung ausgegangen. Dies sind gängige Verfahren zur Statuserkennung und werden daher hier nicht weiter ausgeführt. Die Reaktion auf einen Fehlerfall kann von der Kontrollinstanz und abhängig vom Anwendungsfall gestartet und/oder ausgelöst werden. Zum Beispiel kann ein Neustart der gesamten Auswertung ausgelöst werden, oder es können nur einzelne betroffene Einrichtungen der Anordnung neu gestartet werden, oder es kann eine andere Einrichtung mit derselben Aufgabe beauftragt werden, oder es können die Messung und Auswertung vollständig abgebrochen werden und das Werkstück kann aussortiert werden (zum Beispiel wenn eine festgelegte Prüfzeit nicht mehr eingehalten werden kann).

Eine über die Aufnahme der Messdaten hinausgehende Dauer der Auswertung beeinflusst die Aufnahme weiterer Messdaten von anderen Werkstücken nicht. Bei einer In-Line Messung während der Serienfertigung von Werkstücken kann beispielsweise mit einer Messung eines weiteren Werkstücks begonnen werden, selbst wenn noch nicht alle Rechenknoten ihre Auswertung der Messdaten von einem vorangehend vermessenden Werkstück abgeschlossen haben.

Durch dieses Verfahren können Messdaten, auch in Teilen, ohne Speichern und Laden von Prüfplänen weitergegeben werden. Eine spezielle Form der Auswertungsaufgabe ist das Schreiben/Protokollieren sämtlicher Messdaten in eine Datenbank oder Dateien. Dies ist jedoch optional, kann parallel zur Auswertung stattfinden und ist individualisierbar.

Die Ergebnisse der Auswertung können zum Beispiel nach gleichen Verfahren (Push oder Pull) wie die Verteilung der Messdaten und/oder der Auswertungsaufgaben an eine Einrichtung zur Sammlung der Auswertungsergebnisse (zum Beispiel gemäß einem Berichtsprotokoll) übersandt werden.

Ausführungsbeispiele und weitere Merkmale von Ausführungsformen der Erfindung werden nun unter Bezugnahme auf die beigefügte Zeichnung beschrieben. Die einzelnen Figuren der Zeichnung zeigen:
- Fig. 1: schematisch ein Blockdiagramm einer ersten Anordnung zum Auswerten von Messdaten,
- Fig. 2: eine Anordnung zur Darstellung von verschiedenen Möglichkeiten der Auswertung von Messdaten, wenn zumindest eine übergeordnete Auswertungseinrichtung und eine nachgeordnete Auswertungseinrichtung vorhanden sind, wie dies bei der Anordnung aus Fig. 1 der Fall ist,
- Fig. 3: einen Teil einer Anordnung zur Auswertung von Messdaten mit zwei Einrichtungen, anhand der eine Betriebsweise gemäß dem Push-Prinzip beschrieben wird,
- Fig. 4: einen Teil einer Anordnung zur Auswertung von Messdaten mit drei Einrichtungen, anhand der eine Betriebsweise gemäß dem Pull-Prinzip und/oder bei Broadcasting von Messdaten beschrieben wird,
- Fig. 5: schematisch ein Blockdiagramm einer zweiten Anordnung zum Auswerten von Messdaten,
- Fig. 6: ein Werkstück, für das Prüfmerkmale zu bestimmen sind, und
- Fig. 7: schematisch einen Prozess der Selektion des ersten Datenteils, der die Messpunkte enthält, welche für eine zu lösende Auswertungsaufgabe erforderlich sind.

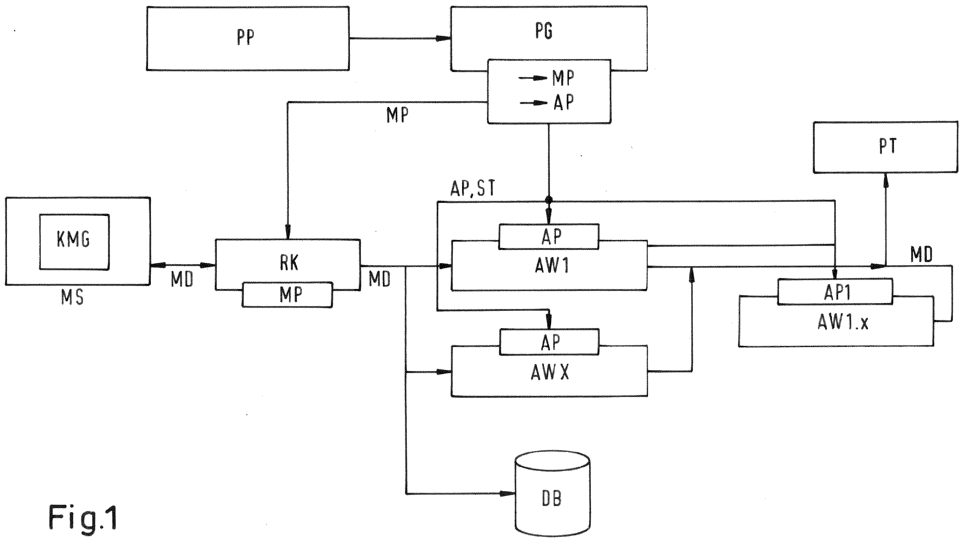

Fig. 1 zeigt eine erste Anordnung zum Auswerten von Messdaten. In der Fig. 1 sind durch Rechtecke sowohl Einrichtungen der Anordnung als auch Pläne symbolisiert. Ferner ist unten in Fig. 1 eine Datenbank DB dargestellt.

Links in Fig. 1 dargestellt weist die Anordnung ein Messsystem MS auf, das mindestens ein Koordinatenmessgerät KMG aufweist. In der dargestellten Ausführungsform ist zusätzlich zu dem Messsystem MS ein Rechenknoten RK vorhanden, welcher sowohl die Steuerung der Vermessung von Messeobjekten, insbesondere Werkstücken und Anordnungen von Werkstücken, ausführt als auch von dem Messsystem MS gelieferte Messdaten MD empfängt und an Auswertungseinrichtungen AW überträgt. Hierzu ist der Rechenknoten RK über eine bidirektionale Datenübertragungsverbindung mit dem Messsystem MS verbunden. Der Rechenknoten RK kann daher auch die oben bereits erwähnte Daten-Sendereinrichtung aufweisen. Optional kann auch der Rechenknoten RK eine Auswertungseinrichtung sein, d. h. zumindest eine Auswertungsaufgabe bei der Auswertung der von dem Messsystem MS gelieferten Messdaten MD ausführen. Er erhält die Auswertungsaufgabe(n) in diesem Fall auf die gleiche Weise wie die anderen Auswertungseinrichtungen AW.

Unterhalb des Rechenknotens RK ist ein Messplan MP dargestellt. Auf Basis der Information in diesem Messplan MP steuert der Rechenknoten RK die Vermessung der Messobjekte durch das Messsystem MS.

Der Rechenknoten RK ist mit einer Einrichtung der Anordnung verbunden, die als Plangenerierung PG bezeichnet ist. Die Plangenerierung PG erstellt auf Basis eines in dem oben beschriebenen Sinn abstrakten Prüfplans den Messplan MP und einen Auswertungsplan AP mit den auf Auswertungseinrichtungen AW zu verteilenden Auswertungsaufgaben. Die Plangenerierung PG überträgt wie erwähnt den Messplan MP zu dem Rechenknoten RK. Ferner überträgt sie den Auswertungsplan AP zu einer Mehrzahl von Auswertungseinrichtungen AW. Dabei ist es nicht zwingend erforderlich, dass die Plangenerierung PG Teile des Auswertungsplans AP direkt zu allen vorhandenen Auswertungseinrichtungen überträgt. Vielmehr können zumindest Teile der zu den Auswertungseinrichtungen AW übertragenen Informationen des Auswertungsplans AP von der jeweiligen Auswertungseinrichtung AW zu zumindest einer weiteren Auswertungseinrichtung AW übertragen werden. Dies ist in dem dargestellten Ausführungsbeispiel der Fall in Bezug auf die Auswertungseinrichtung AW1, welche eine Mehrzahl von Auswertungsaufgaben des Auswertungsplans AP von der Plangenerierung PG erhalten hat und zumindest eine der erhaltenen Auswertungsaufgabe zu der Auswertungseinrichtung AW1.x überträgt. Der Buchstabe x in der Bezeichnung AW1.x bedeutet, dass es optional beliebig viele weitere Auswertungseinrichtungen AW geben kann, die von der Auswertungseinrichtung AW mit jeweils zumindest einer Auswertungsaufgabe versorgt werden.

In dem Ausführungsbeispiel ist eine Mehrzahl der Auswertungseinrichtungen AW, nämlich die Auswertungseinrichtungen AW1 bis AWX (bei denen es sich wie X bezeichnet um beliebig viele Auswertungseinrichtungen AW handeln kann) über eine Datenübertragung Verbindung mit dem Rechenknoten RK verbunden. Der Rechenknoten RK überträgt die Messdaten zu diesen Auswertungseinrichtungen AW1 bis AWX, aber nicht zu den nachgeordneten Auswertungseinrichtungen AW, hier lediglich Auswertungseinrichtung AW1.x. Optional kann auch den anderen Auswertungseinrichtungen als der Auswertungseinrichtung AW1 zumindest eine weitere Auswertungseinrichtung nachgeordnet sein. Auch die jeweilige übergeordnete Auswertungseinrichtung AW1 bis AWX und die jeweilige nachgeordnete Auswertungseinrichtung AW1.x sind über eine Datenübertragungsverbindung miteinander verbunden, damit die erforderlichen Messdaten oder alle Messdaten, die von dem Messsystem MS erzeugt worden sind, übertragen werden können. In dem konkret dargestellten Ausführungsbeispiel ist die einzige dargestellte nachgeordnete Auswertungseinrichtung AW1.x sogar mit einer Mehrzahl der übergeordneten Auswertungseinrichtungen AW verbunden, nämlich zumindest mit der Auswertungseinrichtung AW1 und der Auswertungseinrichtung AWX. Sie kann auch mit allen übergeordneten Auswertungseinrichtungen AW zur Übertragung von Messdaten MD verbunden sein.

Auch die bereits erwähnte Datenbank DB kann als Auswertungseinrichtung aufgefasst werden, denn die von ihr empfangenen Messdaten MD können später durch Zugriff auf die Datenbank DB gemäß einer Auswertungsaufgabe des Auswertungsplans AP oder gemäß einer zusätzlichen Auswertungsaufgabe ausgewertet werden. Vorzugsweise empfängt die Datenbank DB sämtliche von dem Messsystem MS und von dem Rechenknoten RK abgesendeten Messdaten MD. Alternativ empfängt die Datenbank DB nur diejenigen Messdaten MD, welche einer oder mehreren ihr zugeordneten Auswertungsaufgabe(n) zugeordnet sind. Anders als in Fig. 1 dargestellt, kann die Datenbank DB daher ebenfalls zumindest eine Auswertungsaufgabe des Auswertungsplans AP von der Plangenerierung PG empfangen.

Die Übertragung der Messdaten MD bei der in Fig. 1 dargestellten Ausführungsform kann sowohl gemäß dem oben beschriebenen Push-Betrieb abhängig von der jeweils gestellten Auswertungsaufgabe, als auch gemäß dem oben beschriebenen Pull-Betrieb als Broadcasting zu den einzelnen Auswertungseinrichtung AW erfolgen. Ein Pull-Betrieb ist auch in Bezug auf die Datenübertragung von einer übergeordneten zu einer nachgeordneten Auswertungseinrichtung AW möglich. Insbesondere für den Push-Betrieb kann daher die Information über die jeweiligen Auswertungsaufgaben der Auswertungseinrichtungen AW und eventueller nachgeordnete Auswertungseinrichtungen AW zumindest soweit bei dem Rechenknoten RK vorhanden sein, dass dieser die für die Ausführung der Auswertungsaufgaben erforderlichen Messdaten übertragen kann.

Ferner ist in Fig. 1 ein Protokoll PT dargestellt, bei dem es sich auch um eine Einrichtung der Anordnung handeln kann, zu der die Messergebnisse von den verschiedenen Auswertungseinrichtungen AW übertragen werden, um ein Protokoll zu erstellen.

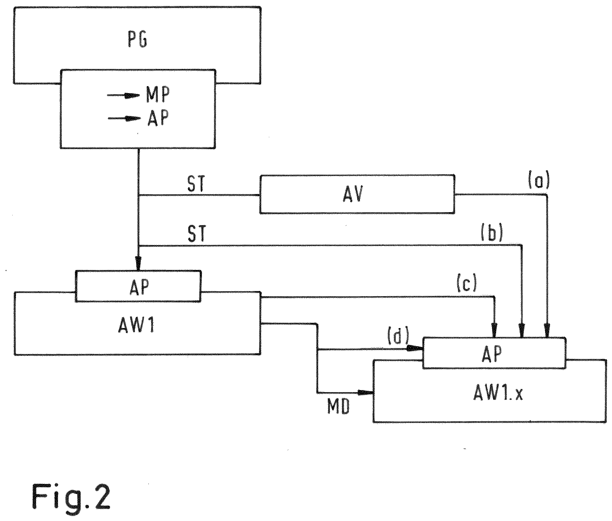

Fig. 2 zeigt einen Teil einer Anordnung zur Auswertung von Messdaten. Insbesondere kann die in Fig. 2 dargestellte Anordnung ein Teil der in Fig. 1 dargestellten Anordnung sein. Die Anordnung gemäß Fig. 2 weist zumindest eine übergeordnete Auswertungseinrichtung AW1 und zumindest eine nachgeordnete Auswertungseinrichtung AW1.x auf. Allerdings muss es sich dabei nicht zwingend um die so bezeichneten Auswertungseinrichtungen aus Fig. 1 handeln. Vielmehr kann es sich bei der übergeordneten Auswertungseinrichtung AW1 optional auch um den Rechenknoten RK aus Fig. 1 handeln, wenn dieser eine Auswertungseinrichtung ist, und kann es sich bei der nachgeordneten Auswertungseinrichtung AW1.x aus Fig. 2 um eine der übergeordneten Auswertungseinrichtungen AW1 bis AWX handeln.

Anhand der Darstellung in Fig. 2 werden nun verschiedene weitere mögliche Ausführungsformen der Anordnung und des Verfahrens beschrieben. Gemäß einer weiteren Ausführungsform ist eine Auswertungsverteilung AV vorgesehen und ist diese Auswertungsverteilung mit der Plangenerierung PG verbunden. Ferner ist sie mit den Auswertungseinrichtungen AW verbunden. Die Plangenerierung PG erzeugt einen Startbefehl ST und überträgt diesen zu der Auswertungsverteilung AV, welche den Startbefehl ST an Auswertungseinrichtungen AW, zum Beispiel die Auswertungseinrichtungen AW1 und AW1.x, weiterleitet.

Bei den Auswertungseinrichtungen AW, an die der Startbefehl ST erteilt wird, handelt es sich vorzugsweise um Auswertungseinrichtungen, welche bereit für die Ausführung einer Auswertungsaufgabe sind. Daher kann die Anordnungen bzw. das Verfahren vorsehen, dass die Auswertungseinrichtungen AW der Auswertungsverteilung AV oder in einer anderen Ausführungsform einer anderen Einrichtung der Anordnung wie zum Beispiel der Plangenerierung PG ihre Bereitschaft zur Ausführung einer Auswertungsaufgabe anzeigen. Hierzu können die Übertragungsverbindungen, über die die Befehle und/oder die Messdaten MD an die Auswertungseinrichtungen AW übertragen werden, als bidirektionale Übertragungsverbindungen ausgestaltet sein/werden. Die in diesem Absatz beschriebenen Merkmale können auch bei anderen Ausführungsformen als der zunächst anhand von Fig. 2 beschriebenen Ausführungsform vorhanden sein.

Zurückkommend auf die Fig. 2, wird der Startbefehl ST insbesondere über die Übertragungsverbindung von der Auswertungsverteilung AV zu der Auswertungseinrichtung AW1 und über die mit (a) bezeichnete Übertragungsverbindung zu der nachgeordneten Auswertungseinrichtung AW1.x übertragen.

Gemäß einer weiteren Ausführungsform, die anhand von Fig. 2 beschrieben wird, kann auf die Auswertungsverteilung AV verzichtet werden oder reduziert sich ihre Funktion darauf, wie oben beschrieben die Information zu empfangen, welche Auswertungseinrichtung AW bereit zur Ausführung einer Auswertungsaufgabe ist. Sie kann diese Information an die Plangenerierung PG oder eine andere Einrichtung der Anordnung übertragen. Die Startbefehle ST werden jedoch von der Plangenerierung PG an die Auswertungseinrichtungen AW übermittelt, wie dies durch die mit (b) bezeichnete Übertragungsverbindung angedeutet ist.

Die beschriebenen Ausführungsformen können auch dann realisiert werden, wenn es sich bei den dargestellten Auswertungseinrichtungen AW nicht um eine übergeordnete und eine nachgeordnete Auswertungseinrichtung handelt. In diesem Fall würde die rechts in Fig. 2 dargestellte Auswertungseinrichtung AW1.x nicht nachgeordnet sein und daher direkt mit einer in Fig. 2 nicht dargestellten Daten-Sendereinrichtung verbunden sein. In jedem Fall kann die in Fig. 2 dargestellte Anordnung aber auch so erweitert werden, dass nicht nur eine übergeordnete Auswertungseinrichtung AW1, sondern zum Beispiel wie in Fig. 1 dargestellt weitere solche übergeordneten Auswertungseinrichtungen AW vorhanden sind. Diese sind dann alle mit der Plangenerierung PG und/oder der Auswertungsverteilung AV für den Erhalt eines Startbefehls ST verbunden.

Bei noch einer weiteren Ausgestaltung ist wie in Fig. 2 dargestellt zumindest eine nachgeordnete Auswertungseinrichtung AW1.x vorhanden und erhält diese den Startbefehl ST entsprechend der mit (c) gekennzeichneten Übertragungsverbindung von der zugehörigen übergeordneten Auswertungseinrichtung AW1. Diese übergeordnete Auswertungseinrichtung AW1 kann den Startbefehl ST von der Plangenerierung PG oder einer anderen Einrichtung der Anordnung erhalten oder sie kann den Startbefehl ST selbstständig generieren, wenn ihr noch zumindest eine Auswertungsaufgabe gestellt worden ist, für deren Ausführung sie momentan nicht bereit ist.

Gemäß noch einer weiteren Ausgestaltung kann jede der Auswertungseinrichtungen AW eine Auswertungsaufgabe gemeinsam mit Messdaten MD erhalten, wie dies in dem konkreten Ausführungsbeispiel der Fig. 2 für die nachgeordnete Auswertungseinrichtung AW1.x dargestellt ist. Die Übertragungsverbindung von der übergeordneten Auswertungseinrichtung AW1 führt zur Übertragung der Auswertungsaufgabe sowohl (wie durch (d) bezeichnet) zu dem Auswertungsplan AP der nachgeordneten Auswertungseinrichtung AW1.x als auch zur Übertragung der Messdaten MD direkt zu der Auswertungseinrichtung AW1.x.

Insgesamt, unter Bezug auf die anhand von Fig. 2 beschriebenen Ausführungsformen und Ausgestaltungen, kann sowohl die Plangenerierung PG als auch die Auswertungsverteilung AV die von den einzelnen Auswertungseinrichtungen AW auszuführenden Auswertungsaufgaben aus dem Auswertungsplan AP der Plangenerierung PG auf diese verteilen. Dabei kann wie beschrieben auch eine übergeordnete Auswertungseinrichtung AW1 eine Auswertungsaufgabe auf eine nachgeordnete Auswertungseinrichtung AW1.x übertragen.

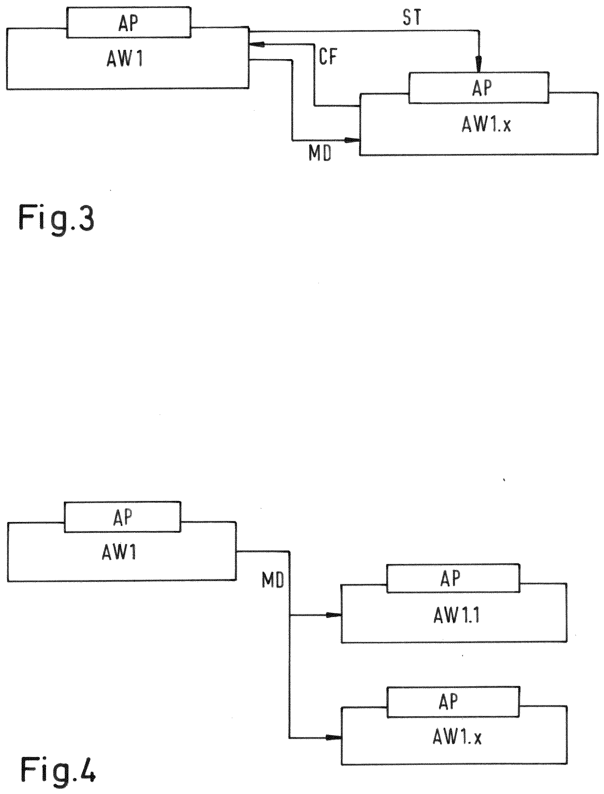

Aus Fig. 3 sind zwei Einrichtungen einer Anordnung erkennbar. Insbesondere kann es sich um die in Fig. 1 und Fig. 2 dargestellten übergeordnete Auswertungseinrichtung AW1 und die zugehörige nachgeordnete Auswertungseinrichtung AW1.x handeln. Es kann sich jedoch auch um den zum Beispiel in Fig. 1 dargestellten Rechenknoten RK (dann links in Fig. 3) oder eine andere Daten-Sendereinrichtung und eine der übergeordneten Auswertungseinrichtungen AW1 bis AWX (dann rechts in Fig. 3) handeln.

Der Sender (hier mit AW1 bezeichnet) gibt den Auswertungsplan und/oder den Startbefehl ST über eine entsprechende Übertragungsverbindung an einen Empfänger weiter, optional über eine Auswertungsverteilung wie anhand von Fig. 2 bereits erläutert. Der Sender ist allerdings anders als bei Fig. 2 nicht die Plangenerierung PG. Der Empfänger bestätigt seine Bereitschaft zur Ausführung der Auswertungsaufgabe und erhält die für die Ausführung der Auswertungsaufgabe erforderlichen Messdaten MD über eine DatenÜbertragungsverbindung. Der Empfänger hat in diesem Fall keinen Einfluss auf die Datenmenge, die ihm zugesendet wird und die er verarbeitet, zumindest empfängt und abspeichert. Außerdem wählt der Sender die Auswertungseinrichtung aus, welche der Empfänger ist, oder der Sender bekommt den Befehl, diese Auswertungseinrichtung mit der Auswertungsaufgabe und den Messdaten MD zu versorgen.

Aus Fig. 4 sind drei Einrichtungen einer Anordnung erkennbar. Insbesondere kann es sich um die in Fig. 1 dargestellten übergeordnete Auswertungseinrichtung AW1 und zwei zugehörige nachgeordnete Auswertungseinrichtung AW1.1, AW1.x handeln. Die Bezeichnung der nachgeordneten Auswertungseinrichtungen deutet auch an, dass es sich um eine beliebige Anzahl von nachgeordneten Auswertungseinrichtungen handeln kann. Alternativ kann sich jedoch auch um den zum Beispiel in Fig. 1 dargestellten Rechenknoten RK (dann links in Fig. 3) oder eine andere Daten-Sendereinrichtung und eine Mehrzahl von übergeordneten Auswertungseinrichtungen (dann rechts in Fig. 3) handeln.

Insbesondere haben die rechts in Fig. 4 dargestellten Auswertungseinrichtungen AW1.1 bis AW1.x bereits ihre Auswertungsaufgaben erhalten. Sie sind jeweils als individueller Auswertungsplan AP für Ihren Zugriff bzw. als Auftrag an ihre Steuerungseinrichtung vorhanden. Dann werden von der links in Fig. 4 dargestellten Einrichtung AW1 Messdaten MD im Broadcasting-Betrieb an alle rechts dargestellten Auswertungseinrichtungen AW1.1 bis AW1.x und optional an weitere Auswertungseinrichtungen gesendet. Diese empfangen alle die gesamten Messdaten MD und selektieren die für die Ausführung der ihr gestellten Auswertungsaufgabe(n) erforderlichen Messdaten (d.h. den ersten Datenteil und gegebenenfalls auch den zweiten Datenteil). Wenn die jeweilige Auswertungseinrichtung alle für die Ausführung der ihr gestellten Auswertungsaufgabe(n) erforderlichen Messdaten erhalten hat, kann sie optional den Empfang von Messdaten beenden.

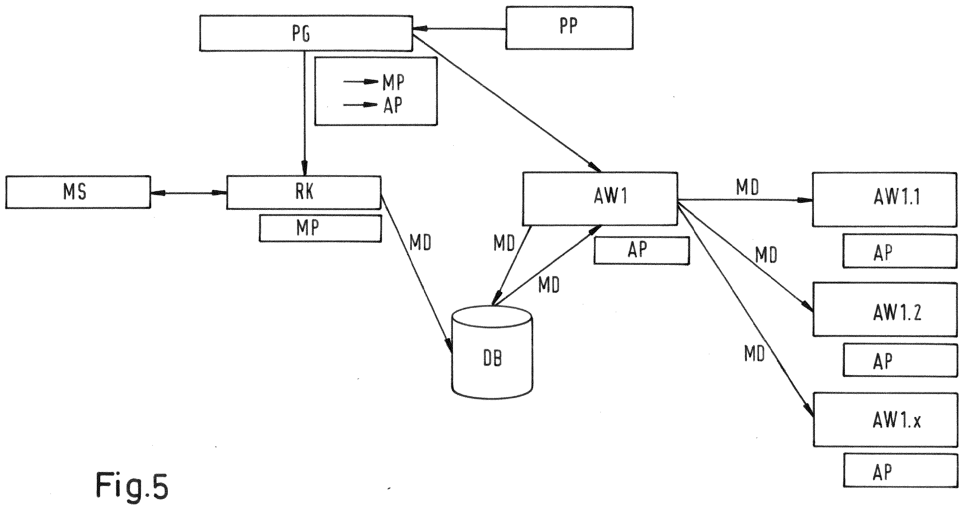

Fig. 5 zeigt eine zweite Ausführungsform einer Anordnung zum Auswerten von Messdaten. Wie bei der ersten Ausführungsform gemäß Fig. 1 ist eine Mehrzahl von Auswertungseinrichtungen AW vorhanden, die untereinander in irgendeiner der bereits beschriebenen Beziehungen zueinanderstehen können. Insbesondere können wie anhand von Fig. 1 bis Fig. 4 bereits beschrieben beliebig viele nebengeordnete Auswertungseinrichtungen vorhanden sein, und zwar sowohl als übergeordnete Auswertungseinrichtungen als auch als nachgeordnete Auswertungseinrichtungen. Es können auch keine nachgeordneten Auswertungseinrichtungen vorhanden sein.

Fig. 5 kann daher insbesondere so modifiziert werden, dass zusätzlich zu der Auswertungseinrichtung AW1 weitere übergeordnete Auswertungseinrichtungen vorhanden sind. Die in Fig. 5 dargestellten Auswertungseinrichtungen AW1.1, AW1.2 und AW1.x mit jeweils einem zugehörigen Auswertungsplan AP stellen dar, dass zu der übergeordneten Auswertungseinrichtung AW1 eine beliebige Anzahl von nachgeordneten Auswertungseinrichtungen vorhanden sein kann. Wenn eine weitere übergeordnete Auswertungseinrichtung vorhanden ist, kann dieser ebenfalls eine beliebige Anzahl von Auswertungseinrichtungen nachgeordnet sein.

Der wesentliche Unterschied zu der ersten Ausführungsform gemäß Fig. 1 besteht darin, dass der Rechenknoten RK, bei dem es sich optional wie auch bei Fig. 1 um eine Auswertungseinrichtung handeln kann, die Messdaten MD zu einer Datenbank DB überträgt. Von dieser Datenbank DB werden die Messdaten auf Anforderung AF abgerufen, in der konkreten Darstellung lediglich von einer übergeordneten Auswertungseinrichtung AW1.die Messdaten MD könnten jedoch auf Anforderung AF auch von jeder weiteren vorhandenen übergeordneten Auswertungseinrichtung abgerufen werden. Daher weisen sowohl der Rechenknoten RK als auch die Datenbank DB und auch jede übergeordnete Auswertungseinrichtung AW1, welcher eine Auswertungseinrichtung AW1.x nachgeordnet ist, einen Anschluss an das Übertragungsnetz auf, über welches die Messdaten übertragen werden können. Die Daten-Sendereinrichtung, welche fortlaufend die von dem zumindest einen Koordinatenmessgerät erzeugten Messdaten zu den zumindest zwei Auswertungseinrichtungen sendet, kann in der Datenbank DB und/oder in jeder übergeordneten Auswertungseinrichtung AW1 vorhanden sein bzw. damit kombiniert sein. Wenn zum Beispiel zwei übergeordnete Auswertungseinrichtungen vorhanden sind, überträgt bereits die in der Datenbank DB vorhandene oder damit kombinierte Daten-Sendereinrichtung die Messdaten MD an eine Mehrzahl von Auswertungseinrichtungen. Wenn lediglich eine übergeordnete Auswertungseinrichtung AW1 vorhanden ist, überträgt deren Daten-Sendereinrichtung die Messdaten MD an eine Mehrzahl von nachgeordneten Auswertungseinrichtungen AW1.1, AW1.2 bis AW1.x.

Da die übergeordnete(n) Auswertungseinrichtung(en) in dem konkret dargestellten Ausführungsbeispiel die Messdaten MD aus der Datenbank DB abrufen, handelt es sich insbesondere um den Fall des Push-Betriebes. Ohne eine solche Anforderung, oder wenn die Anforderung lediglich signalisiert, dass eine Auswertungseinrichtung bereit zur Ausführung einer Auswertungsaufgabe ist, kann auch ein Pull-Betrieb durchgeführt werden.

Ansonsten kann der Betrieb der Anordnung bzw. kann das Verfahren so stattfinden, wie oben insbesondere zur ersten Ausführungsform und den Fig. 1-4 oder allgemein bereits beschrieben worden ist.

Gegenüber der in Fig. 5 dargestellten Ausführungsform und den bereits beschriebenen Abwandlungen davon kann es weitere Abwandlungen geben. Zum Beispiel kann alternativ oder zusätzlich zu der zumindest einen übergeordneten Auswertungseinrichtung AW1 eine weitere Einrichtung vorgesehen sein, über die die jeweiligen Auswertungspläne AP zu einer Mehrzahl von Auswertungseinrichtungen übertragen werden. Diese Auswertungseinrichtungen können übergeordnete oder nachgeordnete Auswertungseinrichtungen sein. Im Fall einer nachgeordneten Auswertungseinrichtung kann diese den Auswertungsplan AP von der weiteren Einrichtung insbesondere indirekt über die ihr zugehörige übergeordnete Auswertungseinrichtung empfangen. Optional kann die weitere Einrichtung ebenfalls eine Auswertungseinrichtung sein, die zumindest eine Auswertungsaufgabe des gesamten Auswertungsplans ausführt.

Ferner kann bei jeder der beschriebenen Ausführungsformen und bei den beschriebenen Abwandlungen jeweils mehr als ein Koordinatenmessgerät vorhanden sein. Insbesondere kann daher nicht nur ein Messsystem MS, sondern kann eine Mehrzahl von Messsystemen MS vorhanden sein. Jedem der Messsysteme MS kann ein Rechenknoten RK zugeordnet sein, der sich so verhält und so funktioniert wie die anhand von Fig. 1 bis Fig. 5 bereits beschriebenen Rechenknoten RK. Im Ergebnis findet insbesondere eine Übertragung von Messdaten von jedem dieser Rechenknoten RK und/oder von jedem dieser Messsysteme MS zu derselben Einrichtung oder zu denselben Einrichtungen der Anordnung statt, die anhand von Fig. 1 bis Fig. 5 bereits beschrieben wurden.

Fig. 6 zeigt ein Werkstück 1, welches eine in der Darstellung vordere, d. h. nach vorne weisende zu vermessende Oberfläche 3 aufweist. Die Oberfläche 3 soll eben sein, d. h. die Oberflächenpunkte sollen innerhalb einer Ebene liegen. Durch ein nicht dargestelltes Koordinatenmessgerät wird eine Vielzahl von Messpunkten 5 nicht nur auf der Oberfläche 3, sondern auch auf den anderen Oberflächen des Werkstücks 1 gemessen, d. h. die Koordinaten der Messpunkte werden bestimmt. Durch Auswertung der Lage der Messpunkte kann als Prüfmerkmal ein Maß für die Ebenheit der Oberfläche 3 ermittelt werden. Um die Messpunkte der vorderen Oberfläche 3 aus dem gesamten Datensatz der vorhandenen Messpunkte auszuwählen, kann zum Beispiel das räumliche Kriterium verwendet werden, dass diese Messpunkte innerhalb eines schmalen Quaders liegen, innerhalb dessen sich die vordere Oberfläche 3 befindet. Um diese Selektion zu verbessern, können durch eine Vorverarbeitung in Bezug auf jede der Oberflächen des Werkstücks 1 Messpunkte ausgeschlossen werden, die einen geringeren Abstand zum Rand der jeweiligen Oberfläche haben als durch einen Mindest-Abstandsmaß vorgegeben ist. In der Praxis können zum Beispiel auf diese Weise einhundert bis zweihundert Messpunkte der vorderen Oberfläche 3 ausgewählt werden, um die Ebenheit der Oberfläche 3 zu bestimmen. Alternativ können die einzelnen Oberflächen des Werkstücks 1 nacheinander vermessen werden, wobei pro Oberfläche eine vorgegebene Anzahl von Messpunkten vermessen wird. In diesem Fall ist bekannt, welche Ordnungszahlen in der Reihenfolge der Vermessung die Messpunkte der vorderen Oberfläche 3 haben. Bei der Auswahl dieser Messpunkte aus dem Datensatz werden diese anhand ihrer bekannten Ordnungszahlen ermittelt und ausgewählt. Unabhängig von der Vorgehensweise bei der Auswahl der zu verarbeitenden Messpunkte bedeutet die Auswahl insbesondere, dass die ausgewählten Messpunkte in dem Datensatz als zu verarbeitende Messpunkte gekennzeichnet werden. Auch wenn dies nicht bevorzugt wird, ist es auch möglich, die nicht ausgewählten Messpunkte aus dem Datensatz zu löschen. Eine weitere Alternative im Fall des Push-Prinzips besteht darin, nur die ausgewählten Messpunkte zu einer Empfangseinrichtung zu übertragen. In diesem Fall ist daher weder eine Kennzeichnung der ausgewählten Messpunkte noch eine Löschung anderer Messpunkte erforderlich, wenn die Auswahl unmittelbar dazu führt, dass der jeweilige Messpunkt übertragen wird.

Optional können für das Werkstück 1 weitere Prüfmerkmale zu bestimmen sein. Zum Beispiel kann ohne Beschränkung der Allgemeinheit wie in Bezug auf die vordere Oberfläche beschrieben auch bei der hinteren Oberfläche verfahren werden und dann die Parallelität der Oberflächen bestimmt werden. Wenn die in der Darstellung der Fig. 6 annähernd senkrecht zur vorderen Oberfläche 3 zu bestimmende Länge bestimmt werden soll, können Messpunkte der vorderen und der hinteren Oberfläche verarbeitet werden.

Demnach liegen die Messpunkte zur Bestimmung der Ebenheit der Oberfläche 3 in einem räumlichen Bereich um die als ideal eben angenommene Oberfläche. Dieser räumliche Bereich kann zum Beispiel zunächst auf Basis von Planungsdaten zur Herstellung des Werkstücks definiert werden. Wenn angenommen werden kann, dass die Ebenheit eine bestimmte Güte hat, kann zum Beispiel ein entsprechend großer räumlicher Bereich definiert werden, der die ideal ebene Oberfläche aufweist und sich beidseits dieser ideal ebenen Oberfläche jeweils in eine Richtung senkrecht zu dieser ideal ebenen Oberfläche erstreckt. Wenn beispielsweise angenommen werden kann, dass durch eine nicht ideale Herstellung des Werkstücks maximal Abweichungen der Lage der Oberflächenpunkt in beiden Richtungen senkrecht zu der Oberfläche mit maximal einer bestimmten Entfernung entstehen können, kann der räumliche Bereich entsprechend groß definiert werden. Das Koordinatensystem der Planungsdaten kann in bekannter Weise mit dem Koordinatensystem der Messpunkte in Übereinstimmung gebracht werden, sodass auch für die Messpunkte der räumliche Bereich definiert ist, in dem die für die Bestimmung des Maßes der Ebenheit der Oberfläche heranzuziehenden Messpunkte liegen.

Messpunkte für die Bestimmung der genannten Länge des Werkstücks 1 können dann in dem wie beschrieben definierten ersten räumlichen Bereich für die vordere Oberfläche 3 und in dem entsprechend definierten zweiten räumlichen Bereich für die rückwärtige Oberfläche liegen. Bei der Selektion der Messpunkte für das Prüfmerkmal der Ebenheit der vorderen Oberfläche 3 werden daher alle Messpunkte in dem ersten räumlichen Bereich ausgewählt und bei der Selektion der Messpunkte für das Prüfmerkmal der Länge werden alle Messpunkte in dem ersten und in dem zweiten räumlichen Bereich ausgewählt. Dagegen können zum Beispiel Messpunkte, die sich etwa in der Mitte der in Fig. 6 nach rechts weisenden Oberfläche des Werkstücks 1 befinden, als nicht für diese Prüfmerkmale relevant ermittelt werden.

Das anhand von Fig. 6 beschriebene Beispiel ist nicht auf einen bestimmten Typ von Koordinatenmessgeräten beschränkt. Zum Beispiel können die Oberflächenmesspunkte mit einem taktilen Koordinatenmessgerät, einen Koordinatenmessgerät mit einem optischen Sensor und/oder einem mit invasiver Strahlung arbeitenden Koordinatenmessgerät zur Aufnahme von Projektionsbildern ermittelt worden sein. Abhängig von dem Typ des Koordinatenmessgeräts ist aber die Vorverarbeitung der Roh-Messdaten bis zum Erhalt der Messpunkte verschieden.

Fig. 7 zeigt schematisch Einrichtungen und Informationen in Zusammenhang mit der Selektion der für die jeweilige Auswertungsaufgabe zu ermittelnden Messpunkte. In dem konkret dargestellten Ausführungsbeispiel sind die Messdaten, welche die vorhandenen Messpunkte aufweisen, in einem Datenspeicher 13 gespeichert. Bei dem Datenspeicher 13 kann es sich um einen Datenspeicher eines Koordinatenmessgeräts handeln, in den die aus der Vermessung eines Werkstücks erhaltenen Daten zum Beispiel fortlaufend während des Fortschreitens der Messung oder zum Beispiel blockweise nach Abschluss der Messung und/oder nach Abschluss zumindest eines Teils einer Vorverarbeitung der Roh-Messdaten gespeichert werden. Insbesondere können die Messpunkte aus dem Datenspeicher 13 nacheinander abgerufen werden, zum Beispiel in der Reihenfolge ihrer Messung oder nach einem anderen Kriterium geordnet. Bei dem Datenspeicher 13 muss es sich auch nicht um einen an einem einzigen Ort angeordneten Datenspeicher handeln. Vielmehr kann es sich auch um einen verteilten Datenspeicher handeln, bei dem ein Teil der gespeicherten Messpunkte physikalisch an einem Ort gespeichert sind und zumindest ein anderer Teil der gespeicherten Messpunkte physikalisch an einem anderen Ort gespeichert sind. Die Speicherorte können insbesondere über ein für den Anschluss eines Netzes von Computern ausgestaltetes Übertragungsnetz miteinander verbunden sein.

Alternativ oder zusätzlich kann sich an der Stelle des Datenspeichers 13 ein Koordinatenmessgerät befinden, das als Quelle der Messpunkte dient. Zum Beispiel liefert das Koordinatenmessgerät fortlaufend mit dem Ablauf der Vermessung des Werkstücks Messpunkte.

Ferner ist in Fig. 7 schematisch eine Selektionseinrichtung 11 dargestellt, die jeweils für eine gestellte Auswertungsaufgabe wie oben beschrieben direkt oder indirekt den ersten Datenteil selektierten, welcher für die Ausführung der Auswertungsaufgabe erforderlich ist. Als Ergebnis wird zumindest der erste Datenteil 15a erzeugt, der die für die Ausführung erforderlichen Messpunkte aufweist, und der zweite Datenteil 15b erzeugt, der die für die Ausführung nicht erforderlichen Messpunkte aufweist.

Die Darstellung und bisherige Beschreibung der Fig. 7 stellen lediglich das Grundprinzip der Selektion des ersten Datenteils schematisch dar. Oben wurde jedoch bereits beschrieben, dass bei der Übertragung der Daten das Push-Prinzip oder das Pull-Prinzip oder eine Kombination von beiden zur Anwendung kommen kann. Die Selektion der Messpunkte des ersten Datenteils 15a kann daher zum Beispiel aus dem Datenstrom vorgenommen werden, der alle vorhandenen und/oder entstehenden Messdaten eines Messobjekts enthält. Die Selektion kann in diesem Fall zum Beispiel von einer Auswertungseinrichtung vorgenommen werden, die die Auswertungsaufgabe auszuführen hat, oder von einer dieser Auswertungseinrichtung oder einer Mehrzahl von Auswertungseinrichtungen zugeordneten Einrichtung. Eine solche mehreren Auswertungseinrichtungen zugeordnete Einrichtung kann zum Beispiel die Messpunkte aller ersten Datenteil selektieren und/oder zum Beispiel speichern und/oder weiterleiten. "Alle ersten Datenteile" sind in diesem Fall auf die der Einrichtung zugeordneten Auswertungseinrichtungen bezogen, d. h diese Datenteile enthalten die für die Ausführung der Auswertungsaufgabe der zugeordneten Auswertungseinrichtungen Messpunkte. Alternativ oder zusätzlich kann die Selektion der Messpunkte des ersten Datenteils zum Beispiel zumindest teilweise vor der Übertragung von Daten zu einer Auswertungseinrichtung oder einer zumindest einer Auswertungseinrichtung zugeordneten Einrichtung vorgenommen werden.

Es soll an dieser Stelle und ohne Beschränkung auf die konkreten Ausführungsbeispiele der Fig. 6 und Fig. 7 erläutert werden, dass die direkte oder indirekte Selektion des ersten Datenteils in manchen Fällen bereits beginnen kann, wenn noch nicht alle Messdaten vorliegen. Ein Grund dafür kann die Tatsache sein, dass die Messung noch nicht abgeschlossen ist. Ein anderer Grund kann es sein, dass die Übertragung der Messdaten noch nicht abgeschlossen ist und die Messdaten bei der Empfangseinrichtung noch nicht vollständig vorliegen. Es wird daher bevorzugt, dass Zusatzinformation über den zeitlichen Ablauf der Vermessung des Messobjekts und/oder Zusatzinformation über eine Ordnung der Messpunkte erstellt und/oder erhalten wird. Durch Auswertung der Zusatzinformation wird ermittelt, dass trotz der noch nicht vollständig vorliegenden Messdaten keine weiteren Messdaten mehr hinzukommen können, die zu dem ersten Datenteil gehören. Zum Beispiel kann wie erwähnt die Reihenfolge der Aufnahme der Messpunkte vorgegeben sein und kann zum Beispiel sogar konkret vorgegeben sein, dass die ersten einhundert Messpunkte (oder eine andere Folge von Messpunkten) die vollständige Menge von Messpunkten für die Lösung einer zugeordneten Auswertungsaufgabe bildet. Ein anderes Beispiel besteht darin, dass räumliche Bereiche der Vermessung eines Messobjekts definiert sind und das Messobjekt nacheinander in diesen räumlichen Bereichen vermessen wird. Wenn zum

Beispiel das Koordinatenmessgerät den Sensor zu einem anderen räumlichen Bereich verfährt, kann daraus geschlossen werden, dass die Messpunkte in dem zuvor vermessenen räumlichen Bereich vollständig sind. Ferner können zum Beispiel zwei- oder dreidimensionale Bilddaten aus der Vermessung eines Messobjekts mit zumindest einem optischen Sensor bei ihrer Auswertung in Bildbereiche unterteilt werden, aus denen nacheinander Messpunkte erzeugt werden, zum Beispiel wiederum orientiert an räumlichen Bereichen des Messobjekts. Zum Beispiel kommt es an Kanten von Messobjekten bei manchen Auswertungsverfahren dazu, dass relativ aufwändige Rechenoperationen durchgeführt werden müssen, um die Lage der Kante zu ermitteln. Ferner gibt es Verfahren, die Bildstapel des Messobjekts mit unterschiedlichen Fokusabständen zwischen dem optischen Sensor und dem Messobjekt erzeugen und nachträglich für jeden Messpunkt oder Oberflächenpunkt des Messobjekts ermitteln, in welchem Bild des Bildstapels die schärfste Abbildung stattgefunden hat. Der Fokusabstand dieses Bildes entspricht dann dem Abstand zwischen dem optischen Sensor und dem Messpunkt. Wenn daher insbesondere bei einer solchen Aufbereitung der Bilddaten Bereichsweise vorgegangen wird, kann nach Abschluss eines Bildbereichs oder eines Teilbereichs des erfassten Messobjekts davon ausgegangen werden, dass für diesen Bereich keine weiteren Messpunkte hinzukommen. Wenn mit Abschluss des Bildbereichs daher alle Messpunkte des ersten Datenteils einer zugeordneten Auswertungsaufgabe vorliegen, kann die Selektion dieser Messpunkte abgeschlossen werden. Zum Beispiel kann dann mit der Auswertung begonnen werden und/oder können die zu diesem ersten Datenteil gehörenden Messpunkte zu einer anderen Einrichtung übertragen werden.

Gemäß einer Ausgestaltung können die für eine Mehrzahl von Auswertungsaufgaben erforderlichen Messdaten bereits vollständig vorliegen, zum Beispiel gespeichert in einem Datenspeicher wie zum Beispiel dem anhand von Fig. 6 erläuterten Datenspeicher 13. D. h. die Messdaten werden nicht fortlaufend zum Beispiel von zumindest einem Koordinatenmessgerät erzeugt während der und/oder für die fortlaufende Übertragung selektiert. Für die jeweilige Auswertungsaufgabe können dann die erforderlichen Daten des ersten Datenteils zum Beispiel gemäß dem Push-Betrieb vor der Übertragung oder zum Zwecke der Übertragung an die jeweilige Empfangseinrichtung selektiert werden. Gemäß einer konkreten Ausgestaltung können die in dem Datenspeicher gespeicherten Daten vorsortiert werden. Die Prüfung, ob die Messpunkte zu dem jeweiligen ersten Datenteil gehören, kann dann durch Zugriff auf die in dem Datenspeicher gespeicherten Daten erfolgen. Als Ergebnis der Prüfung kann zum Beispiel in dem Datenspeicher die zusätzliche Information gespeichert werden, für welche Auswertungsaufgabe die Messpunkte erforderlich sind. Dies schließt wiederum den Fall mit ein, dass auch Messdaten als möglicherweise erforderlich selektiert werden, die tatsächlich für die Auswertungsaufgabe nicht erforderlich sind. Wie auch in anderen Fällen kann dies deshalb der Fall sein, weil ein räumlicher Bereich, in denen die erforderlichen Messpunkte liegen, größer als zwingend erforderlich definiert worden ist. Eine solche Definition des räumlichen Bereichs ist zum Beispiel zweckmäßig, wenn die Selektion andernfalls aufwendiger wird und/oder wenn gewährleistet werden soll, dass erforderliche Messpunkte in dem räumlichen Bereich enthalten sind. Zum Beispiel sind Toleranzen bei der Fertigung von Werkstücken im Vorhinein nicht genau bekannt und wird daher der räumliche Bereich so gewählt, dass auch bei hohen Fertigungstoleranzen die entsprechenden Messpunkte in dem räumlichen Bereich liegen.

### Bezugszeichenliste

- AF: Anforderung
- AP: Auswertungsplan
- AV: Auswertungsverteilung
- AW: Auswertungseinrichtung
- CF: Bestätigung
- DB: Datenbank
- MD: Messdaten
- MP: Messplan
- MS: Messsystem
- PG: Plangenerierung
- PP: Prüfplan
- PT: Protokoll
- RK: Rechenknoten
- ST: Startbefehl (z. B. Boot-Push)
- 1: Werkstück
- 3: Oberfläche
- 5: Messpunkt

## Patentansprüche

1. Anordnung zum Auswerten von Messdaten (MD) aus einer Vermessung von Messobjekten durch zumindest ein Koordinatenmessgerät (KMG), wobei die Messdaten (MD) Messpunkte des jeweils vermessenen Messobjekts aufweisen, wobei die Anordnung aufweist:
- zumindest zwei Auswertungseinrichtungen (AW) zur Auswertung der Messdaten (MD) und zur Erzeugung von Auswertungsergebnissen gemäß einem Auswertungsplan (AP),
- Anschlüsse an ein Übertragungsnetz, wobei die Anordnung ausgestaltet ist, die Messdaten (MD), insbesondere von dem zumindest einen Koordinatenmessgerät (KMG) und/oder von einer Daten-Speichereinrichtung, zu den zumindest zwei Auswertungseinrichtungen (AW) zu übertragen,
- eine Daten-Sendeeinrichtung, die zumindest einen der Anschlüsse an das Übertragungsnetz aufweist und die ausgestaltet ist, die von dem zumindest einen Koordinatenmessgerät (KMG) erzeugten Messdaten (MD) fortlaufend zu den zumindest zwei Auswertungseinrichtungen (AW) zu senden,
wobei der Auswertungsplan (AP) eine Mehrzahl von Auswertungsaufgaben definiert, die zur Erzeugung der Auswertungsergebnisse auszuführen sind,
wobei jeder der zumindest zwei Auswertungseinrichtungen (AW) in Bezug auf ein gegebenes, von dem zumindest einen Koordinatenmessgerät (KMG) vermessenes Messobjekt lediglich ein Teil der durch den Auswertungsplan (AP) definierten Auswertungsaufgaben zugeordnet ist,
wobei jede der Auswertungseinrichtungen (AW) ausgestaltet ist, von den Messdaten (MD), die von der Daten-Sendeeinrichtung in Bezug auf das gegebene Messobjekt an die zumindest zwei Auswertungseinrichtungen (AW) gesendet werden, einen ersten Datenteil zu verarbeiten, der für eine Ausführung der ihr zugeordneten Auswertungsaufgabe(n) erforderlich ist, aber einen zweiten Datenteil nicht zu verarbeiten, der für eine Ausführung der ihr zugeordneten Auswertungsaufgabe(n) nicht erforderlich ist.

2. Anordnung nach Anspruch 1, wobei für zumindest eine der Auswertungsaufgaben, die einer der zumindest zwei Auswertungseinrichtungen (AW) zugeordnet ist, jeweils ein räumlicher Bereich oder ein Ordnungsbereich der Messdaten definiert ist, in dem alle Messpunkte des ersten Datenteils liegen und in dem keine Messpunkte des zweiten Datenteils liegen, und wobei die Anordnung ausgestaltet ist, Messpunkte
- des ersten Datenteils auf Grundlage einer Prüfung selektieren, ob der jeweilige Messpunkt in dem räumlichen Bereich oder dem Ordnungsbereich der Messdaten liegt, der für die zu lösende Auswertungsaufgabe definiert ist, und/oder
- des zweiten Datenteils auf Grundlage einer Prüfung selektieren, ob der jeweilige Messpunkt außerhalb des räumlichen Bereichs oder des Ordnungsbereichs der Messdaten liegt, der für die zu lösende Auswertungsaufgabe definiert ist.

3. Anordnung nach Anspruch 1 oder 2, wobei die Daten-Sendeeinrichtung ausgestaltet ist, die von dem zumindest einen Koordinatenmessgerät (KMG) erzeugten Messdaten (MD) fortlaufend während der Vermessung des gegebenen Messobjekts zu den zumindest zwei Auswertungseinrichtungen (AW) zu senden oder diesen Vorgang zu einem späteren Zeitpunkt in gleicher Art zu wiederholen.

4. Anordnung nach einem der Ansprüche 1 bis 3, wobei die Daten-Sendeeinrichtung ausgestaltet ist, die von dem zumindest einen Koordinatenmessgerät (KMG) erzeugten und außerhalb von dem zumindest einen Koordinatenmessgerät (KMG) auszuwertenden Messdaten (MD) vollständig an jede der zumindest zwei Auswertungseinrichtungen (AW) zu senden, und wobei jede der zumindest zwei Auswertungseinrichtungen (AW) eine zugeordnete Auswahleinrichtung aufweist, die ausgestaltet ist, den ersten Datenteil zur Ausführung der ihr zugeordneten Auswertungsaufgabe(n) auszuwählen.

5. Anordnung nach einem der Ansprüche 1 bis 3, wobei die Daten-Sendeeinrichtung ausgestaltet ist, Untermengen der Messdaten zu bilden, um an eine, mehrere oder alle der Auswertungseinrichtungen (AW) jeweils den zweiten Datenteil nicht zu senden, der für die Ausführung der der Auswertungseinrichtung (AW) zugeordneten Auswertungsaufgabe(n) nicht erforderlich ist.

6. Anordnung nach einem der Ansprüche 1 bis 5, wobei jede der zumindest zwei Auswertungseinrichtungen (AW) eine zugeordnete Steuereinrichtung aufweist, die ausgestaltet ist, die Auswertungseinrichtung (AW) zur Auswertung der von ihr empfangenen Messdaten (MD) entsprechend der/den ihr zugeordneten Auswertungsaufgabe(n) zu steuern.

7. Anordnung nach einem der Ansprüche 1 bis 6, wobei die Anordnung eine Aufgaben-Verteilungseinrichtung aufweist, die ausgestaltet ist, die Mehrzahl von Auswertungsaufgaben vor Beginn, zu Beginn und/oder während der fortlaufenden Sendung der erzeugten Messdaten (MD) zu den zumindest zwei Auswertungseinrichtungen (AW) auf für die Ausführung der Mehrzahl von Auswertungsaufgaben verfügbare Auswertungseinrichtungen (AW) zu verteilen.

8. Verfahren zum Auswerten von Messdaten (MD) aus einer Vermessung von Messobjekten durch zumindest ein Koordinatenmessgerät (KMG), wobei die Messdaten (MD) Messpunkte des jeweils vermessenen Messobjekts aufweisen, wobei eine Anordnung zum Auswerten der Messdaten (MD) Folgendes aufweist:
- zumindest zwei Auswertungseinrichtungen (AW), die die Messdaten (MD) auswerten und die Auswertungsergebnisse gemäß einem Auswertungsplan (AP) erzeugen,
- Anschlüsse an ein Übertragungsnetz, wobei die Anordnung die Messdaten (MD), insbesondere von dem zumindest einen Koordinatenmessgerät (KMG) und/oder von einer Daten-Speichereinrichtung, zu den zumindest zwei Auswertungseinrichtungen (AW) überträgt,
- eine Daten-Sendeeinrichtung, die einen der Anschlüsse an das Übertragungsnetz aufweist und die von dem zumindest einen Koordinatenmessgerät (KMG) erzeugte Messdaten (MD) fortlaufend zu den zumindest zwei Auswertungseinrichtungen (AW) sendet,
wobei der Auswertungsplan (AP) eine Mehrzahl von Auswertungsaufgaben definiert, die zur Erzeugung der Auswertungsergebnisse auszuführen sind,
wobei jeder der zumindest zwei Auswertungseinrichtungen (AW) in Bezug auf ein gegebenes, von dem zumindest einen Koordinatenmessgerät (KMG) vermessenes Messobjekts lediglich ein Teil der durch den Auswertungsplan (AP) definierten Auswertungsaufgaben zugeordnet ist und/oder wird,
wobei jede der Auswertungseinrichtungen (AW) von den Messdaten (MD), die von der Daten-Sendeeinrichtung in Bezug auf das gegebene Messobjekt an die zumindest zwei Auswertungseinrichtungen (AW) gesendet werden, einen ersten Datenteil verarbeitet, der für eine Ausführung der ihr zugeordneten Auswertungsaufgabe(n) erforderlich ist, aber einen zweiten Datenteil nicht verarbeitet der für eine Ausführung der ihr zugeordneten Auswertungsaufgabe(n) nicht erforderlich ist.

9. Verfahren nach Anspruch 8, wobei für zumindest eine der Auswertungsaufgaben, die einer der zumindest zwei Auswertungseinrichtungen (AW) zugeordnet ist, jeweils ein räumlicher Bereich oder ein Ordnungsbereich der Messdaten definiert ist, in dem alle Messpunkte des ersten Datenteils (15a) liegen und in dem keine Messpunkte des zweiten Datenteils (15b) liegen, und wobei Messpunkte
- des ersten Datenteils auf Grundlage einer Prüfung selektiert werden, ob der jeweilige Messpunkt in dem räumlichen Bereich oder dem Ordnungsbereich der Messdaten liegt, der für die zu lösende Auswertungsaufgabe definiert ist, und/oder
- des zweiten Datenteils auf Grundlage einer Prüfung selektiert werden, ob der jeweilige Messpunkt außerhalb des räumlichen Bereichs oder des Ordnungsbereichs der Messdaten liegt, der für die zu lösende Auswertungsaufgabe definiert ist.

10. Verfahren nach Anspruch 8 oder 9, wobei die Daten-Sendeeinrichtung die von dem zumindest einen Koordinatenmessgerät (KMG) erzeugten Messdaten (MD) fortlaufend während der Vermessung des gegebenen Messobjekts zu den zumindest zwei Auswertungseinrichtungen (AW) sendet.

11. Verfahren nach einem der Ansprüche 8 bis 10, wobei die Daten-Sendeeinrichtung die von dem zumindest einen Koordinatenmessgerät (KMG) erzeugten und außerhalb von dem zumindest einen Koordinatenmessgerät (KMG) auszuwertenden Messdaten (MD) vollständig an jede der zumindest zwei Auswertungseinrichtungen (AW) sendet und wobei jede der zumindest zwei Auswertungseinrichtungen (AW) eine zugeordnete Auswahleinrichtung aufweist, die den ersten Datenteil zur Ausführung der ihr zugeordneten Auswertungsaufgabe(n) auswählt.

12. Verfahren nach einem der Ansprüche 8 bis 10, wobei die Daten-Sendeeinrichtung an eine, mehrere oder alle der Auswertungseinrichtungen (AW) jeweils einen Datenteil nicht sendet, der für die Ausführung der der Auswertungseinrichtung zugeordneten Auswertungsaufgabe(n) nicht erforderlich ist.

13. Verfahren nach einem der Ansprüche 8 bis 12, wobei jede der zumindest zwei Auswertungseinrichtungen (AW) eine zugeordnete Steuereinrichtung aufweist, die die Auswertungseinrichtung zur Auswertung der von ihr empfangenen Messdaten (MD) entsprechend der/den ihr zugeordneten Auswertungsaufgabe(n) steuert.

14. Verfahren nach einem der Ansprüche 8 bis 13, wobei die Anordnung eine Aufgaben-Verteilungseinrichtung aufweist, die die Mehrzahl von Auswertungsaufgaben vor Beginn, zu Beginn und/oder während der fortlaufenden Sendung der erzeugten Messdaten (MD) zu den zumindest zwei Auswertungseinrichtungen (AW) auf für die Ausführung der Mehrzahl von Auswertungsaufgaben verfügbare Auswertungseinrichtungen (AW) verteilt.

15. Verfahren zum Herstellen einer Anordnung zum Auswerten von Messdaten (MD) aus einer Vermessung von Messobjekten durch zumindest ein Koordinatenmessgerät (KMG), wobei die Messdaten (MD) Messpunkte des jeweils vermessenen Messobjekts aufweisen, wobei:
- optional zumindest ein Koordinatenmessgerät (KMG) zur Erzeugung der Messdaten (MD) bereitgestellt wird,
- zumindest zwei Auswertungseinrichtungen (AW) zur Auswertung der Messdaten (MD) und zur Erzeugung von Auswertungsergebnissen gemäß einem Auswertungsplan (AP) bereitgestellt werden,
- Anschlüsse zu einem Übertragungsnetz hergestellt werden, wobei die Anordnung ausgestaltet wird, die Messdaten (MD) von dem zumindest einen Koordinatenmessgerät (KMG) zu den zumindest zwei Auswertungseinrichtungen (AW) zu übertragen,
- eine Daten-Sendeeinrichtung, die zumindest einen der Anschlüsse an das Übertragungsnetz aufweist, ausgestaltet wird, die von dem zumindest einen Koordinatenmessgerät (KMG) erzeugten Messdaten (MD) fortlaufend zu den zumindest zwei Auswertungseinrichtungen (AW) zu senden,
wobei der Auswertungsplan (AP) eine Mehrzahl von Auswertungsaufgaben definiert, die zur Erzeugung der Auswertungsergebnisse auszuführen sind,
wobei jeder der zumindest zwei Auswertungseinrichtungen (AW) in Bezug auf ein gegebenes, von dem zumindest einen Koordinatenmessgerät (KMG) vermessenes Messobjekt lediglich ein Teil der durch den Auswertungsplan (AP) definierten Auswertungsaufgaben zugeordnet ist,
wobei jede der Auswertungseinrichtungen (AW) ausgestaltet wird, von den Messdaten (MD), die von der Daten-Sendeeinrichtung in Bezug auf das gegebene Messobjekt an die zumindest zwei Auswertungseinrichtungen (AW) gesendet werden, einen ersten Datenteil zu verarbeiten, der für eine Ausführung der ihr zugeordneten Auswertungsaufgabe(n) erforderlich ist, aber einen zweiten Datenteil nicht zu verarbeiten, der für eine Ausführung der ihr zugeordneten Auswertungsaufgabe(n) nicht erforderlich ist.
